# EUROPEAN PATENT SPECIFICATION

(11) **EP 4 373 602 B1**
(45) Date of publication and mention of the grant of the patent: **21.10.2026**
(21) Application number: 22786198.6
(22) Date of filing: 14.09.2022
(51) Int. Cl.: B01D 53/62, B01D 53/14, B01D 53/18

(54) **CAPTURING CARBON DIOXIDE**
ERFASSUNG VON KOHLENDIOXID
CAPTURE DE DIOXYDE DE CARBONE

(30) Priority: 14.09.2021 US 202163244180 P
(43) Date of publication of application: 29.05.2024
(73) Proprietor: Carbon Engineering ULC, Squamish, BC V8B 0A2 (CA)
(72) Inventor: ZELLER III, Robert Louis, Squamish, BC V8B 0A2 (CA); PACE, John Mitchell, Squamish, BC V8B 0A2 (CA); ST. ANGELO, David, Squamish, BC V8B 0A2 (CA); OLMSTEAD, Douglas Edward, Squamish, BC V8B 0A2 (CA); HEIDEL, Kenton Robert, Squamish, BC V8B 0A2 (CA); OSTERICHER, Andrew Logan, Squamish, BC V8B 0A2 (CA)
(74) Representative: Fish & Richardson P.C.
(86) International application number: PCT/US2022/043537
(87) International publication number: WO 2023/043843

(56) References cited:
- WO-A1-2010/129077
- US-A1- 2014 008 309
- US-A1- 2020 230 548
- US-A1- 2020 261 846

## Description

This patent claims priority to US provisional patent application 63/244,180 filed September 14, 2021.

### TECHNICAL FIELD

This disclosure describes systems, apparatus, and methods for capturing carbon dioxide.

### BACKGROUND

Capturing carbon dioxide (CO₂) from the atmosphere is one approach to mitigating greenhouse gas emissions and slowing climate change. However, many technologies designed for CO₂ capture from point sources, such as from flue gas of industrial facilities, are generally ineffective in capturing CO₂ from the atmosphere due to the significantly lower CO₂ concentrations and large volumes of atmospheric air required to process. In recent years, progress has been made in finding technologies better suited to capture CO₂ directly from the atmosphere. Some of these direct air capture (DAC) systems use a solid sorbent where an active agent is attached to a substrate. These DAC systems typically employ a cyclic adsorption-desorption process where, after the solid sorbent is saturated with CO₂, it releases the CO₂ using a humidity or thermal swing and is regenerated.

Other DAC systems use a liquid sorbent (sometimes referred to as a solvent) to capture CO₂ from the atmosphere. An example of such a DAC system would be one where a fan is used to draw air across a high surface area packing that is wetted with a solution comprising the liquid sorbent. CO₂ in the air reacts with the liquid sorbent to generate a CO₂ rich solution. The rich solution is processed to regenerate a lean solution and to release as a concentrated carbon stream, for example, CO, CO₂ or other carbon products.

US 2020/0230548 describes a device for removing carbon dioxide from the air including a reaction unit containing a fluid dispersion medium such as fill, a reaction fluid distribution system for distributing sodium or potassium hydroxide over the fluid dispersion medium, and an air mover for drawing or forcing air into the reaction unit to contact the sodium or potassium hydroxide. Carbon dioxide in the air reacts with the potassium or sodium hydroxide to form potassium or sodium carbonate, thus removing carbon dioxide from the air. The device may include humidifiers to humidify the ambient air before it contacts the reaction fluid.

US 2014/0008309 describes producing cleaner water and air without using additional power. The system produces cleaner water by heating the sucked air, which improves the efficiency of the air stripping. The system produces cleaner air by fanning the contaminated air through a thermal oxidizer and/or a carbon filterator. The fanning is powered by a belt pulley powered by the gravitational force from the contaminated water.

US 2020/0261846 describes a gas-liquid contacting apparatus in which at least one rotor assembly including packing is arranged in a contacting chamber containing at least one stator assembly including at least one heat exchanger arranged to thermally modulate the gas-liquid contacting so that each stator assembly is operatively arranged with each stator assembly to provide gas-liquid contacting at temperatures effective for mass exchange between the gas and liquid.

### SUMMARY

Claim 1 defines a gas-liquid contactor for capturing carbon dioxide (CO₂) from ambient air, the gas-liquid contactor includes: a housing defining an interior, the housing including at least one inlet and at least one outlet; a flow system supported by the housing and including: at least one basin that includes a top basin configured to contain a CO₂ capture solution; at least one liquid distribution pipe in fluid communication with at least one turbine nozzle; and a pump configured to flow the CO₂ capture solution through the at least one liquid distribution pipe to the at least one turbine nozzle to emit a pressurized flow of the CO₂ capture solution from the at least one turbine nozzle; and at least one hydraulic fan that includes at least one shaft; a hydraulic turbine mounted to the at least one shaft; and a plurality of fan blades mounted to the at least one shaft , the plurality of fan blades positioned adjacent to the at least one outlet, the hydraulic turbine positioned adjacent to the at least one turbine nozzle and configured to rotate in response to the pressurized flow of the CO₂ capture solution from the at least one turbine nozzle impacting the hydraulic turbine, rotation of the hydraulic turbine causing rotation of the plurality of fan blades, circulation of the ambient air through the at least one inlet and circulation of a CO₂-lean gas through the at least one outlet.

In an aspect combinable with the claimed subject-matter, the CO₂ capture solution includes an aqueous alkaline solution.

In another aspect combinable with any of the previous aspects, the CO₂ capture solution includes a hydroxide solution.

In another aspect combinable with any of the previous aspects, the CO₂ capture solution includes at least one of potassium hydroxide (KOH) and sodium hydroxide (NaOH).

In another aspect combinable with any of the previous aspects, the CO₂ capture solution at a reference temperature has a density greater than a density of water at the reference temperature.

In another aspect combinable with any of the previous aspects, the plurality of fan blades is configured to rotate at a fan speed, and the pump is configured to vary the pressurized flow of the CO₂ capture solution from the at least one turbine nozzle to vary the fan speed.

In another aspect combinable with any of the previous aspects, a fan speed of the plurality of fan blades is configured to increase in response to an increase in the pressurized flow of the CO₂ capture solution from the at least one turbine nozzle.

In another aspect combinable with any of the previous aspects, the gas-liquid contactor includes at least one packing positioned in the interior of the housing adjacent to the at least one inlet, the top basin positioned at least partially above the at least one packing and configured to distribute the CO₂ capture solution over the at least one packing, the at least one basin includes a bottom basin positioned beneath the at least one packing and configured to receive a CO₂-laden capture solution from the at least one packing, and the pump is configured to flow at least some of the CO₂-laden capture solution from the bottom basin to a regeneration system configured to regenerate the at least some of the CO₂-laden capture solution and form a CO₂-lean liquid, and flow the CO₂-lean liquid from the regeneration system into the at least one liquid distribution pipe.

In another aspect combinable with any of the previous aspects, the regeneration system includes a pellet reactor or an electrochemical system.

In another aspect combinable with any of the previous aspects, the regeneration system includes a calciner.

In another aspect combinable with any of the previous aspects, the bottom basin is made of concrete and has a lining of stainless steel or a coating on the concrete, the coating including at least one of high density polyethylene (HDPE), polyurethane-based, and vinyl ester.

In another aspect combinable with any of the previous aspects, the CO₂ capture solution has a pH greater than 10; and the at least one of the hydraulic turbine and the at least one shaft each include a material of construction resistant to the CO₂ capture solution.

In another aspect combinable with any of the previous aspects, the material of construction includes a fiber reinforced plastic (FRP) having a vinyl ester resin.

In another aspect combinable with any of the previous aspects, the plurality of fan blades has the material of construction.

In another aspect combinable with any of the previous aspects, the gas-liquid contactor includes at least one packing positioned in the interior of the housing adjacent to the at least one inlet, the at least one packing having a packing height being equal to a height of the housing.

In another aspect combinable with any of the previous aspects, the gas-liquid contactor includes a plurality of packings, wherein: the at least one inlet includes a plurality of inlets; each packing of the plurality of packings is disposed adjacent to a respective inlet of the plurality of inlets; the housing defines a plenum between at least two of the plurality of packings; and the at least one hydraulic fan is positioned above the plenum.

In another aspect combinable with any of the previous aspects, the at least one shaft has an upright orientation and the plurality of fan blades are positioned above the hydraulic turbine.

In another aspect combinable with any of the previous aspects, the at least one basin includes a turbine basin positioned beneath the hydraulic turbine and above the top basin, wherein the turbine basin is in fluid communication with the top basin and configured to receive the CO₂ capture solution from the hydraulic turbine.

In another aspect combinable with any of the previous aspects, the gas-liquid contactor includes a fan stack mounted to the housing and defining the at least one outlet, wherein rotation of the plurality of fan blades causes circulation of the CO₂-lean gas through the fan stack, the fan stack having a height between 3 m (10 feet) and 9 m (30 feet).

In another aspect combinable with any of the previous aspects, the gas-liquid contactor includes an electric fan including a plurality of fan blades mounted to a fan shaft rotatable by an electric motor, the fan shaft of the electric fan being coaxial with the at least one shaft of the hydraulic fan, wherein rotation of the fan blades of the electric fan is configured to cause circulation of the ambient air through the at least one inlet and circulation of the CO₂-lean gas through the at least one outlet.

In another aspect combinable with any of the previous aspects, the gas-liquid contactor includes a plurality of upright fans forming a wall of upright fans, each upright fan of the plurality of upright fans including fan blades of the plurality of fan blades, wherein: the at least one shaft includes a plurality of shafts, each shaft of the plurality of shafts coupled to the fan blades of a respective upright fan of the plurality of upright fans, the plurality of shafts defining a plurality of horizontal axes about which the respective plurality of shafts and the respective fan blades are rotatable; and the hydraulic turbine is mechanically coupled to each shaft of the plurality of shafts and configured to rotate each of the plurality of shafts.

In a related, illustrative implementation, a direct air capture (DAC) system for capturing carbon dioxide (CO₂) from ambient air includes: an air contactor including: a housing defining an interior, the housing including at least one inlet and at least one outlet; at least one packing positioned in the interior of the housing adjacent to the at least one inlet; a flow system supported by the housing and including: at least one basin including a top basin configured for containing a CO₂ capture solution, the top basin positioned above the at least one packing for distributing the CO₂ capture solution over the at least one packing, at least one liquid distribution pipe in fluid communication with at least one turbine nozzle, and a pump configured to flow the CO₂ capture solution through the at least one liquid distribution pipe to the at least one turbine nozzle to emit a pressurized flow of the CO₂ capture solution from the at least one turbine nozzle; and at least one hydraulic fan including: at least one shaft, a hydraulic turbine mounted to the at least one shaft, and a plurality of fan blades mounted to the at least one shaft, the plurality of fan blades positioned adjacent to the at least one outlet, the hydraulic turbine positioned adjacent to the at least one turbine nozzle and configured to rotate in response to the pressurized flow of the CO₂ capture solution from the at least one turbine nozzle impacting the hydraulic turbine, wherein rotation of the hydraulic turbine causes rotation of the plurality of fan blades, circulation of the ambient air through the at least one packing, and circulation of a CO₂-lean gas through the at least one outlet; and a regeneration system in fluid communication with the pump to receive the CO₂ capture solution from the air contactor, the regeneration system configured to regenerate the CO₂ capture solution and form a CO₂-lean liquid returned to the air contactor.

In an aspect combinable with the illustrative implementation, the CO₂ capture solution comprises an aqueous alkaline solution.

In another aspect combinable with any of the previous aspects, the CO₂ capture solution comprises a hydroxide solution.

In another aspect combinable with any of the previous aspects, the CO₂ capture solution includes at least one of potassium hydroxide (KOH) and sodium hydroxide (NaOH).

In another aspect combinable with any of the previous aspects, the CO₂ capture solution at a reference temperature has a density greater than a density of water at the reference temperature.

In another aspect combinable with any of the previous aspects, the plurality of fan blades is configured to rotate at a fan speed, and the pump is configured to vary the 5 pressurized flow of the CO₂ capture solution from the at least one turbine nozzle to vary the fan speed.

In another aspect combinable with any of the previous aspects wherein a fan speed of the plurality of fan blades is configured to increase in response to an increase in the pressurized flow of the CO₂ capture solution from the at least one turbine nozzle.

In another aspect combinable with any of the previous aspects, the air contactor includes at least one packing positioned in the interior of the housing adjacent to the at least one inlet, wherein: the top basin is positioned at least partially above the at least one packing and configured to distribute the CO₂ capture solution over the at least one packing; the at least one basin comprises a bottom basin positioned beneath the at least one packing and configured to receive a CO₂-laden capture solution from the at least one packing; and the pump is configured to flow at least some of the CO₂-laden capture solution from the bottom basin to a regeneration system configured to regenerate the at least some of the CO₂-laden capture solution and form a CO₂-lean liquid, and flow the CO₂-lean liquid from the regeneration system into the at least one liquid distribution pipe.

In another aspect combinable with any of the previous aspects, the regeneration system includes a pellet reactor or an electrochemical system.

In another aspect combinable with any of the previous aspects, the regeneration system includes a calciner.

In another aspect combinable with any of the previous aspects, the bottom basin is made of concrete and has a lining of stainless steel or a coating on the concrete, the coating including one of high density polyethylene (HDPE), polyurethane-based, and vinyl ester.

In another aspect combinable with any of the previous aspects the CO₂ capture solution has a pH greater than 10; and the at least one of the hydraulic turbine and the at least one shaft each comprise a material of construction resistant to the CO₂ capture solution.

In another aspect combinable with any of the previous aspects, the material of construction is a fiber reinforced plastic (FRP) having a vinyl ester resin.

In another aspect combinable with any of the previous aspects, the plurality of fan blades has the material of construction.

In another aspect combinable with any of the previous aspects, the air contactor includes at least one packing positioned in the interior of the housing adjacent to the at least one inlet, the at least one packing having a packing height being equal to a height of the housing.

In another aspect combinable with any of the previous aspects, the air contactor includes a plurality of packings, wherein: the at least one inlet includes a plurality of inlets; each packing of the plurality of packings is disposed adjacent to a respective inlet of the plurality of inlets; the housing defines a plenum between at least two of the plurality of packings; and the at least one hydraulic fan is positioned above the plenum.

In another aspect combinable with any of the previous aspects, the at least one shaft has an upright orientation and the plurality of fan blades are positioned above the hydraulic turbine.

In another aspect combinable with any of the previous aspects, the at least one basin includes a turbine basin positioned beneath the hydraulic turbine and above the top basin, wherein the turbine basin is in fluid communication with the top basin and configured to receive the CO₂ capture solution from the hydraulic turbine.

In another aspect combinable with any of the previous aspects, the air contactor includes a fan stack mounted to the housing and defining the at least one outlet, wherein rotation of the plurality of fan blades cause circulation of the CO₂-lean gas through the fan stack, the fan stack having a height between 3 m (10 feet) and 9 m (30 feet).

In another aspect combinable with any of the previous aspects, the air contactor includes an electric fan including a plurality of fan blades mounted to a fan shaft rotatable by an electric motor, the fan shaft of the electric fan being coaxial with the at least one shaft of the hydraulic fan, wherein rotation of the fan blades of the electric fan is configured to cause circulation of the ambient air through the at least one inlet and circulation of the CO₂-lean gas through the at least one outlet.

In another aspect combinable with any of the previous aspects, the air contactor includes a plurality of upright fans forming a wall of upright fans, each upright fan of the plurality of upright fans including fan blades of the plurality of fan blades, wherein: the at least one shaft comprises a plurality of shafts, each shaft of the plurality of shafts coupled to the fan blades of a respective upright fan of the plurality of upright fans, the plurality of shafts defining a plurality of horizontal axes about which the respective plurality of shafts and the respective fan blades are rotatable; and the hydraulic turbine is mechanically coupled to each shaft of the plurality of shafts and configured to rotate each of the plurality of shafts.

In another related, illustrative example implementation, a method for removing carbon dioxide (CO₂) from ambient air includes: flowing a CO₂ capture solution under pressure against a hydraulic turbine coupled to fan blades to rotate the hydraulic turbine and the fan blades, wherein rotation of the fan blades circulates the ambient air through a packing; and flowing the CO₂ capture solution over the packing to mix the ambient air circulating through the packing with the CO₂ capture solution on the packing, the mixing causing CO₂ from the ambient air to be absorbed into the CO₂ capture solution and forming a CO₂-lean gas.

In an aspect combinable with the illustrative example implementation, the CO₂ capture solution includes an aqueous alkaline solution.

In another aspect combinable with any of the previous aspects, the CO₂ capture solution includes a hydroxide solution.

In another aspect combinable with any of the previous aspects, the CO₂ capture solution under includes at least one of potassium hydroxide (KOH) and sodium hydroxide (NaOH).

In another aspect combinable with any of the previous aspects, the CO₂ capture solution has a density at a reference temperature greater than a density of water at the reference temperature.

In another aspect combinable with any of the previous aspects, flowing the CO₂ capture solution under pressure against the hydraulic turbine includes varying a flow rate of the CO₂ capture solution against the hydraulic turbine, wherein varying the flow rate of the CO₂ capture solution causes a speed of rotation of the fan blades to vary.

In another aspect combinable with any of the previous aspects, flowing the CO₂ capture solution under pressure against the hydraulic turbine includes flowing the CO₂ capture solution at a turbine nozzle flow rate defined between a first turbine nozzle flow rate and a second turbine nozzle flow rate lower than the first turbine nozzle flow rate; flowing the CO₂ capture solution over the packing includes flowing the CO₂ capture solution over the packing at a first liquid loading rate and at a second liquid loading rate lower than the first liquid loading rate; and increasing the turbine nozzle flow rate to the first turbine nozzle flow rate to achieve the first liquid loading rate.

In another aspect combinable with any of the previous aspects, wherein increasing the turbine nozzle flow rate to the first turbine nozzle flow rate increases a speed of rotation of the fan blades.

In another aspect combinable with any of the previous aspects, the method includes processing the CO₂ capture solution with absorbed CO₂ to generate a CO₂-lean liquid; and flowing the CO₂-lean liquid to flow over the packing.

In another aspect combinable with any of the previous aspects, processing the CO₂ capture solution with absorbed CO₂ includes growing carbonate pellets or electrochemically treating the CO₂ capture solution with absorbed CO₂.

In another aspect combinable with any of the previous aspects, rotation of the fan blades discharges the CO₂-lean gas out of a fan stack at a discharge velocity sufficient to prevent ingestion of the CO₂-lean gas into the packing.

In another aspect combinable with any of the previous aspects, flowing the CO₂ capture solution under pressure against the hydraulic turbine includes flowing the CO₂ capture solution to a first basin, and then flowing the CO₂ capture solution over the packing.

In another aspect combinable with any of the previous aspects, flowing the CO₂ capture solution under pressure against the hydraulic turbine to rotate the hydraulic turbine and the fan blades includes: circulating the ambient air horizontally through the packing; flowing the CO₂-lean gas through a plenum defined at least partially by the packing; and flowing the CO₂-lean gas upwardly out of the plenum.

In another aspect combinable with any of the previous aspects, flowing the CO₂ capture solution over the packing includes flowing the CO₂ capture solution over the packing in a direction that is one of cross flow, counter flow and cocurrent flow to a direction along which the ambient air circulates through the packing.

In another related, illustrative example implementation, a gas-liquid contactor for capturing carbon dioxide (CO₂) from ambient air includes: a housing defining an interior, and having at least one inlet and at least one outlet; at least one packing positioned in the interior of the housing adjacent to the at least one inlet; a flow system supported by the housing and comprising: at least one basin including a top basin configured for containing a CO₂ capture solution, the top basin positioned above the at least one packing for distributing the CO₂ capture solution over the at least one packing; at least one liquid distribution pipe in fluid communication with at least one turbine nozzle; and a pump configured to flow the CO₂ capture solution through the at least one liquid distribution pipe to the at least one turbine nozzle to emit a pressurized flow of the CO₂ capture solution from the at least one turbine nozzle; and at least one hydraulic fan comprising at least one shaft, a hydraulic turbine mounted to the at least one shaft, and a plurality of fan blades mounted to the at least one shaft at a location thereon spaced apart from the hydraulic turbine, the plurality of fan blades positioned adjacent to the at least one outlet, the hydraulic turbine positioned adjacent to the at least one turbine nozzle and rotatable upon the pressurized flow of the CO₂ capture solution from the at least one turbine nozzle impacting the hydraulic turbine, rotation of the hydraulic turbine causing rotation of the plurality of fan blades, circulation of the ambient air through the at least one packing, and circulation of a CO₂-lean gas through the at least one outlet

In another related, illustrative example implementation, a gas-liquid contactor for capturing carbon dioxide (CO₂) from ambient air, the gas-liquid contactor includes: a housing defining an interior, the housing comprising at least one inlet and at least one outlet; a flow system supported by the housing and including: at least one basin comprising a top basin containing a CO₂ capture solution, at least one liquid distribution pipe in fluid communication with at least one turbine nozzle, and a pump flowing the CO₂ capture solution through the at least one liquid distribution pipe to the at least one turbine nozzle, the at least one turbine nozzle emitting a pressurized flow of the CO₂ capture solution; and at least one hydraulic fan including: at least one shaft, a hydraulic turbine mounted to the at least one shaft, and a plurality of fan blades mounted to the at least one shaft at a location thereon spaced apart from the hydraulic turbine, the plurality of fan blades positioned adjacent to the at least one outlet, the hydraulic turbine positioned adjacent to the at least one turbine nozzle and rotating in response to the pressurized flow of the CO₂ capture solution from the at least one turbine nozzle impacting the hydraulic turbine, rotation of the hydraulic turbine causing rotation of the plurality of fan blades, circulation of the ambient air through the at least one inlet and circulation of a CO₂-lean gas through the at least one outlet.

The details of one or more implementations of the disclosure are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a schematic illustration of an example gas-liquid contactor according to an embodiment of the claimed subject-matter.
FIG. 2 is a schematic illustration of an example hydraulic fan of the gas-liquid contactor of FIG. 1.
FIG. 3A is a schematic illustration of an example fan stack of a gas-liquid contactor, such as for the gas-liquid contactor of FIG. 1.
FIG. 3B is a schematic illustration of example plume distributions for CO₂-lean gas discharged from different fan and fan stack designs of a gas-liquid contactor according to an embodiment of the claimed subject-matter.
FIG. 4A is a schematic illustration of another example gas-liquid contactor.
FIG. 4B is a top view of the wall of the gas-liquid contactor of FIG. 4A.
FIG. 4C is a side elevational view of the gas-liquid contactor of FIG. 4A.
FIG. 5 is a schematic illustration of the hydraulic fan of FIG. 2 combined with an example electric fan.
FIG. 6 is a schematic illustration of an example counterflow gas-liquid contactor.
FIG. 7 is a schematic illustration of an example crossflow gas-liquid contactor.
FIG. 8 is a schematic illustration of a direct air capture system having the gas-liquid contactor of FIG. 1.
FIG. 9 is a schematic flow diagram of a method for removing carbon dioxide (CO₂) from ambient air.
FIG. 10 is a schematic diagram of an example control system for a gas-liquid contactor system according to an embodiment of the claimed subject-matter.

### DETAILED DESCRIPTION

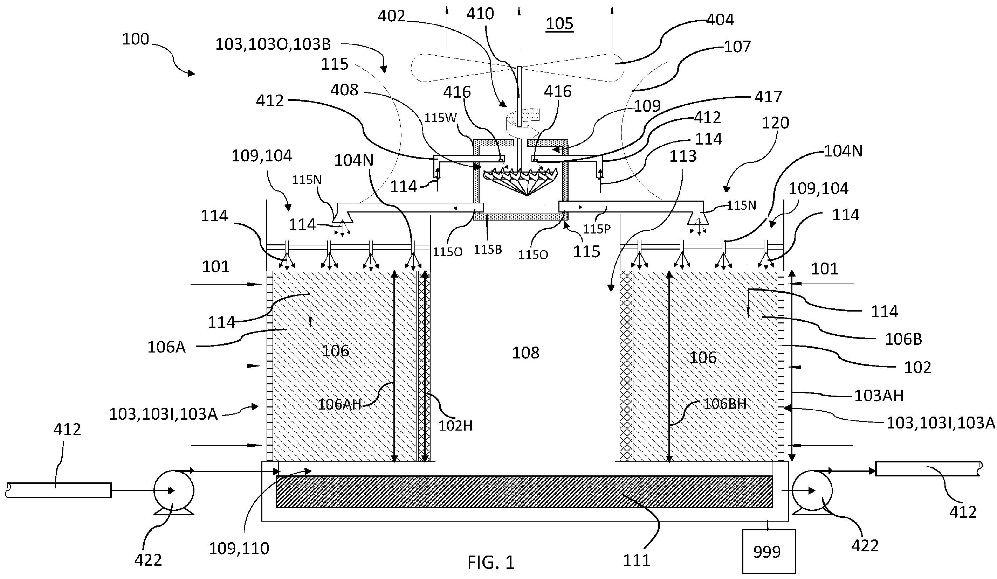

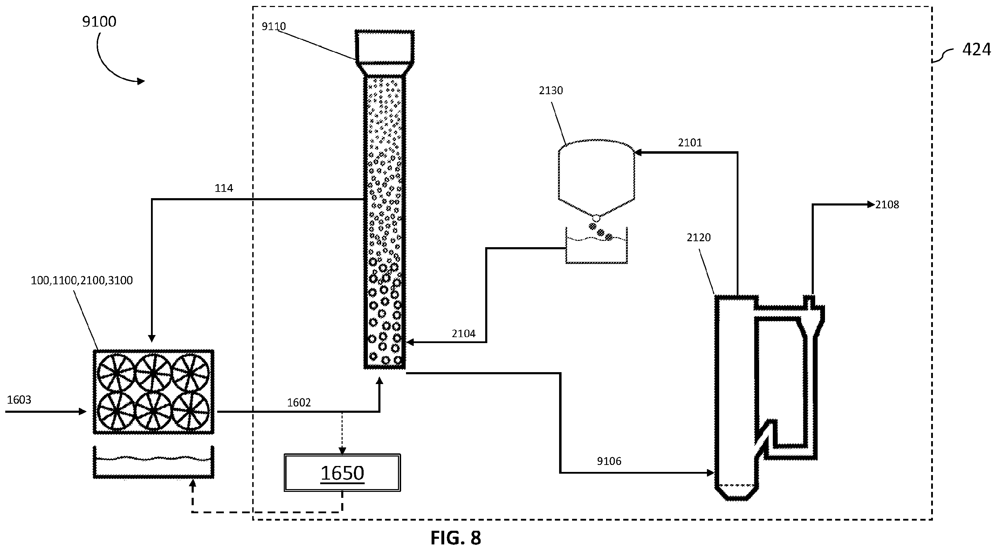

Referring to FIG. 1, the present disclosure describes systems and methods for capturing carbon dioxide (CO₂) with a gas-liquid contactor 100, from the atmosphere (i.e. ambient or atmospheric air) or from another fluid source that contains dilute concentrations of CO₂. Concentrations of CO₂ in the atmosphere are dilute, in that they are presently in the range of 400-420 parts per million ("ppm") or approximately 0.04-0.042% v/v, and less than 1% v/v. These atmospheric concentrations of CO₂ are at least one order of magnitude lower than the concentration of CO₂ in point-source emissions, such as flue gases, where point-source emissions can have concentrations of CO₂ ranging from 5-15% v/v depending on the source of emissions. In some implementations, the gas-liquid contactor 100 is operated to capture the dilute CO₂ present in ambient air by ingesting the ambient air as a flow of CO₂-laden air 101, and by treating the CO₂-laden air 101 so as to transfer CO₂ present therein to a CO₂ capture solution 114 (e.g. a CO₂ sorbent) via absorption. Some or all of the CO₂ in the CO₂-laden air 101 is reduced, and the treated CO₂-laden air 101 is then discharged by the gas-liquid contactor 100 as a flow of CO2-lean gas 105 (or, CO₂-low air). In operating to treat atmospheric air in this manner, the gas-liquid contactor 100 may sometimes be referred to herein as an "air contactor" because it facilitates absorption of CO₂ from the atmospheric air into the CO₂ capture solution 114. In contrast to water cooling towers which function primarily to transfer heat between water and atmospheric air, the gas-liquid contactor 100 functions primarily to achieve a mass transfer of CO₂ from the atmospheric air to the CO₂ capture solution 114. In operating in this manner, the gas-liquid contactor 100 may be used as part of a direct air capture (DAC) system 9100, described in greater detail below in reference to FIG. 8.

In some implementations, and referring to FIG. 1, the CO₂ capture solution 114 is a caustic solution. In some implementations, the CO₂ capture solution 114 has a pH of 10 or higher. In some implementations, the CO₂ capture solution 114 has a pH of approximately 14. A non-exhaustive list of possible caustic CO₂ capture solutions 114 include solutions of, or including, potassium hydroxide (KOH) and/or sodium hydroxide (NaOH). Other examples of the CO₂ capture solution 114 include, but are not limited to, an aqueous alkaline solution, an aqueous amine solution, and an aqueous carbonate and/or bicarbonate solution, with or without containing promoters such as carbonic anhydrase.

In some implementations, and referring to FIG. 1, CO₂ from the CO₂-laden air 101 is captured by contacting the CO₂-laden air 101 with the CO₂ capture solution 114 comprising an alkaline solution in the gas-liquid contactor 100. In some implementations, the CO₂ capture solution 114 can comprise an alkali hydroxide (e.g., KOH, NaOH, or a combination thereof). Reacting the CO₂ from the CO₂-laden air 101 with an alkaline CO₂ capture solution 114 can form a CO₂-laden capture solution 111. In the configuration where the CO₂ capture solution 114 comprises an alkali hydroxide, CO₂ is absorbed by reacting with the alkali hydroxide to form a carbonate-rich capture solution (e.g., K₂CO₃, Na₂CO₃, or a combination thereof). The CO₂-laden capture solution 111 can include the carbonate-rich capture solution and is thus sometimes referred to herein as the "carbonate-rich capture solution 111". The CO₂-laden capture solution 111 can be processed to recover the captured CO₂ for downstream use and to regenerate the alkali hydroxide for use in the CO₂ capture solution 114. In some instances, recovered CO₂ can be delivered downhole and sequestered in a geological formation, subsurface reservoir, carbon sink, or the like. In some instances, the recovered CO₂ may be used for enhanced oil recovery by injecting the recovered CO₂ into one or more wellbores to enhance production of hydrocarbons from a reservoir. In some implementations, recovered CO₂ can be fed to a downstream fuel synthesis system, which can include a syngas generation reactor.

The CO₂-laden capture solution 111 can also include other components in smaller amounts, such as hydroxide ions, alkali metal hydroxide (e.g., KOH, NaOH), water, and impurities. For example, the carbonate-rich capture solution 111 can comprise between 0.4 M to 6 M K₂CO₃ and between 1 M to 10 M KOH. In another implementation, the carbonate-rich capture solution 111 can comprise an aqueous Na₂CO₃-NaOH mixture. In some implementations, the carbonate-rich capture solution 111 can comprise a mixture of K₂CO₃ and Na₂CO₃.

The capture kinetics of capturing CO₂ from the CO₂-laden air 101 to form carbonate may be improved by the introduction of an additive such as a promoter species in the CO₂ capture solution 114. Non-limiting examples of promoters for boosting CO₂ capture with carbonate include carbonic anhydrase, amines (primary, secondary, tertiary), zwitterionic amino acids, and boric acid. The resulting carbonate-rich capture solution 111 produced by the gas-liquid contactor 100 includes carbonates and bicarbonates and includes the promoter as well. An example composition of such a carbonate-rich capture solution 111 may include K₂CO₃/KHCO₃ and a promoter. The carbonate-rich capture solution 111 resulting from such a CO₂ capture solution 114 may have a pH in the range of 11-13 and may have little residual hydroxide from the CO₂ capture solution 114. In some cases, additives that are not considered promoters can be used to improve the uptake of CO₂ in the CO₂ capture solution 114.

Referring to FIG. 1, the gas-liquid contactor 100 includes a housing 102. The housing 102 defines part of the corpus of the gas-liquid contactor 100 and provides structure thereto. The housing 102 includes exterior structure or walls that partially enclose any combination of interconnected structural members. The interconnected structural members provide structural support and stability to the gas-liquid contactor 100, and provide a body for supporting components of the gas-liquid contactor 100 within the housing 102. The interconnected structural members can include, but are not limited to, walls, panels, beams, frames, etc. The housing 102 may include other components as well, such as cladding, panels, etc. which help to close off sides of the housing 102 and define the enclosure of the housing 102. The housing 102 at least partially encloses and defines an interior 113 of the housing 102. The interior 113 of the housing 102 is an inner volume or inner space in which components of the gas-liquid contactor 100 are positioned. The housing 102 also includes openings 103 that allow for movement of gases into and out of the gas-liquid contactor 100. For example, and referring to FIG. 1, the housing 102 has one or more inlet(s) 103I. In the implementation of FIG. 1, the one or more inlet(s) 103I are formed by the openings 103, such that the inlet(s) 103I may be referred to herein as one or more inlet opening(s) 103A through which the CO₂-laden air 101 enters the interior 113 of the housing 102. The housing 102 has one or more outlet(s) 1030. In the implementation of FIG. 1, the one or more outlet(s) 1030 are formed by the openings 103, such that the outlet(s) 1030 may be referred to herein as one or more outlet opening(s) 103B through which the CO₂-lean gas 105 exits the interior 113 of the housing 102. In the example implementation of the gas-liquid contactor 100 of FIG. 1, the housing 102 defines two inlets 103I and one outlet 1030. The outlet 1030 may be defined by a component of the gas-liquid contactor 100. For example, in the implementation of the gas-liquid contactor 100 of FIG. 1, the gas-liquid contactor 100 has a fan stack 107 with an upright orientation. The fan stack 107 helps to discharge the CO₂-lean gas 105, and defines the outlet 1030 of the housing 102. In such an implementation, the CO₂-laden air 101 enters the interior 113 of the housing 102 along a substantially horizontal direction through both of the inlets 103I, and the CO₂-lean gas 105 exits the interior 113 along a substantially vertical direction through the outlet 1030. The outlet 1030 is located at the upper extremity of the fan stack 107. Other configurations for the inlets and outlets 103I,103O of the housing 102 are possible.

The housing 102 at least partially encloses and protects components of the gas-liquid contactor 100 positioned in the interior 113 of the housing 102. One example of such a component is one or more packings 106, which are protected from the surrounding atmosphere by the housing 102. As can be seen in FIG. 1, one or more packings 106, which are sometimes referred to herein collectively as "fill 106" or "packing 106", are located within the interior 113 in a position adjacent to the one or more inlets 103I. In this position, the one or more packings 106 receive the CO₂-laden air 101 which enters the interior 113 via the one or more inlets 103I. The one or more packings 106 function to treat the CO₂-laden air 101 by transferring CO₂ present in the CO₂-laden air 101 to the CO₂ capture solution 114, thereby transforming the CO₂-laden air 101 into the CO₂-lean gas 105 discharged from the one or more outlet(s) 1030 of the gas-liquid contactor 100. The packing 106 achieves this result by receiving a flow of the CO₂ capture solution 114 and by facilitating absorption of the CO₂ present in the CO₂-laden air 101 into the CO₂ capture solution 114 on the packing 106, as described in greater detail below.

Referring to FIG. 1, one possible arrangement of the packing 106 includes two or more packing sections 106A, 106B. Each packing section 106A, 106B is positioned adjacent to and downstream of one of the inlets 103I. The packing sections 106A, 106B are spaced apart from each other within the housing 102. The direction along which the packing sections 106A, 106B are spaced apart is parallel to the direction along which the CO₂-laden air 101 flows through the packing sections 106A, 106B. The space or volume defined between the packing sections 106A, 106B and/or one or more structural members of the housing 102 is a plenum 108. The plenum 108 is flanked by the packing sections 106A, 106B. The plenum 108 is a void or space within the housing 102 into which gases flow downstream of the packing sections 106A, 106B (i.e. the CO₂-lean gas 105), and from which the CO₂-lean gas 105 flows out of the housing 102 through the outlet 1030. The plenum 108 is part of the interior 113 of the housing 102. The volume of the plenum 108 is less than a volume of the interior 113. In some implementations, the volume of the interior 113 of the housing 102 is approximately equal to the combined volume of the packing sections 106A, 106B and the plenum 108. Referring to FIG. 1, the packing 106 is positioned along the same level, or is positioned along the same horizontal lower plane, as the plenum 108. After the CO₂-laden air 101 flows through the packing sections 106A, 106B, the CO₂-lean gas 105 flows through the plenum 108 before being discharged to the ambient environment. In other implementations of the gas-liquid contactor 100, the plenum is absent, as described in greater detail below.

In the example implementation of the gas-liquid contactor 100 of FIG. 1, the CO₂-laden air 101 enters the interior 113 of the housing 102 through both inlets 103I along a substantially horizontal direction through both of the inlets 103I. The CO₂-laden air 101 then flows through the packing sections 106A, 106B along a substantially horizontal direction, where the CO₂ present in the CO₂-laden air 101 contacts the CO₂ capture solution 114 present on the packing sections 106A, 106B and/or flowing in a substantially downward direction over the packing sections 106A, 106B. The CO₂ is absorbed by the CO₂ capture solution 114 to form the CO₂-laden capture solution 111. The CO₂-laden capture solution 111 flows downwardly off the packing sections 106A, 106B, and the CO₂-laden air 101 treated by the packing sections 106A, 106B exits the packing sections 106A, 106B as the CO₂-lean gas 105. The CO₂-lean gas 105 from both packing sections 106A, 106B converges in the plenum 108, and then circulates in a vertically upward direction out of the plenum 108 through the outlet 1030.

In the example implementation of the packing 106 of FIG. 1, each packing section 106A, 106B has a respective packing section height 106AH, 106BH. The packing section heights 106AH, 106BH are substantially equal to a height 102H of the housing 102. In some implementations, the packing section heights 106AH, 106BH are substantially equal to a height 103AH of the inlets 103I. Providing the packing 106 with substantially the same height 106AH, 106BH as the height 102H of the housing and the height 103AH of the inlets may help to prevent or reduce the ability of the CO₂-laden air 101 to bypass the packing 106 (i.e. flow around the packing 106), thereby helping to ensure that the greatest possible volume of CO₂-laden air 101 is treated by the packing 106. By "substantially equal" or "substantially the same", it is understood that the heights 106AH, 106BH, 102H, 103AH are approximately equal in value, with any differences being minimal compared to the overall height dimension, where said differences may result from manufacturing tolerances, packing installation requirements, and/or adjustments in dimensions to allow for seals, baffles or other features. Other configurations for the packing 106 are possible. For example, in another implementation, the packing section heights 106AH, 106BH are less than the height 102H of the housing 102, and any gaps between the packing sections 106A, 106B and the housing 102 are sealed using suitable techniques.

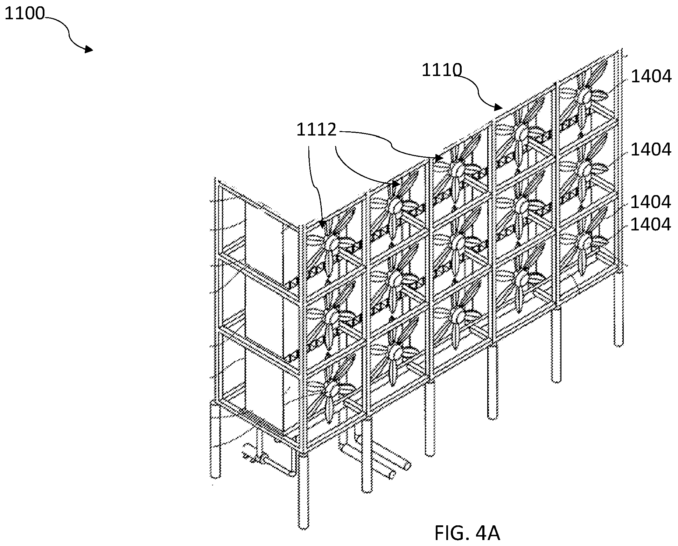

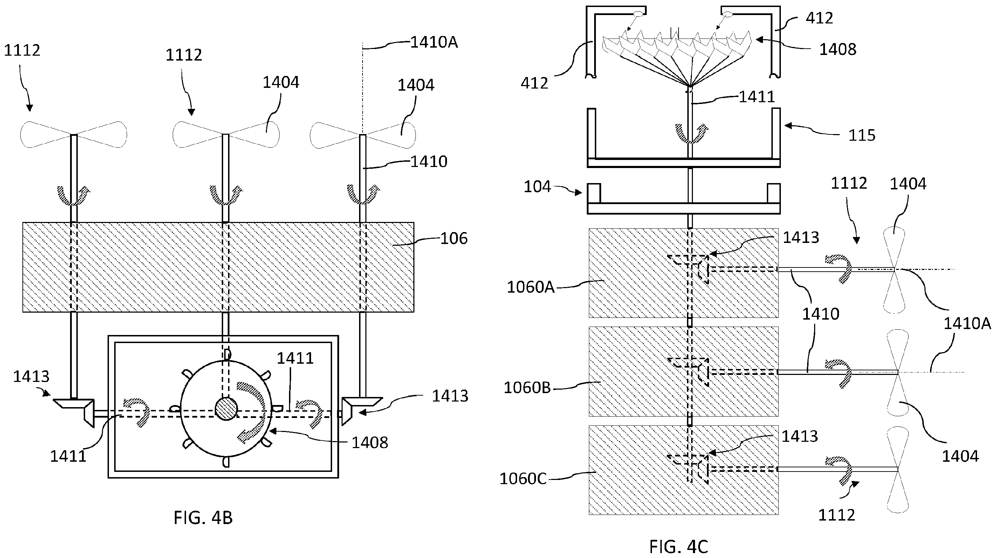

The packing 106 may be made of any suitable material, or have any suitable configuration, to achieve the function ascribed to the packing 106 herein. Some or all of the packing 106 may be made from PVC, which is relatively light, moldable, affordable, and resistant to most chemicals. The packing 106 may be, or include, a film-type fill or a mesh-type fill designed to promote spreading of the liquid CO₂ capture solution 114 into a thin film on the surfaces of the packing 106, which may enable maximum exposure of the liquid CO₂ capture solution 114 to the CO₂ present in the CO₂-laden air 101. Film-type or mesh-type fills are generally more compatible with DAC systems since they have the capacity for more effective mass transfer per unit volume of fill space. For example, film-type fill offers a relatively high specific surface area-to-volume ratio ("specific surface area" in m²/m³). A high specific surface area is not only important for exposure of CO₂ to the surface of the CO₂ capture solution 114, but it also has cost and structural implications. The packing 106 may define an air travel depth (e.g., packing depth), which represents the distance traversed by the CO₂-laden air 101 as it flows through the packing 106. The air travel depth may be in the range of 2-10 meters. The packing 106 may be vertically sectioned, an example of which is provided in FIGS. 4A and 4C, or include multiple packing sections positioned one above another with minimal spacing or vertical gaps therebetween. Each packing section may include multiple packing portions arranged above one another and/or positioned within minimal separation along the air travel depth. In some implementations, the packing 106 is a 3-D structure, where the face of the packing 106 is a cube face or a cuboid face.

Referring to FIG. 1, the gas-liquid contactor 100 has, includes components of, or is functionally linked to, a flow system 120. The flow system 120 operates to move, collect and distribute the CO₂ capture solution 114 and/or the CO₂-laden capture solution 111 over the packing 106 as described herein. The flow system 120 may therefore be referred to as a liquid distribution system. At least some of the features of the flow system 120 are supported by the housing 102. In the example implementation of FIG. 1, the support provided by the housing 102 includes structural support, in that components of the flow system 120 are structurally supported by the housing 102 so that loads generated by these components are supported by the structural members of the housing 102.

Referring to FIG. 1, the flow system 120 includes one or more basins 109. Each basin 109 is a reservoir configured to receive one or both of the CO₂ capture solution 114 and the CO₂-laden capture solution 111 and to hold a volume thereof, thereby serving as a source of the CO₂ capture solution 114 and/or of the CO₂-laden capture solution 111. Each basin 109 may have any configuration or be made of any material suitable to achieve the function ascribed to it in the present description. For example, one or more of the basin(s) 109 may be open-topped, or partially or fully covered.

The basins 109 of the flow system 120 include one or more top basins 104 and one or more bottom basins 110. The top basins 104 are supported by the housing 102. In some implementations, the top basins are formed from portions of the housing 102. The top basins 104 are configured to at least partially enclose or store the CO₂ capture solution 114. Referring to FIG. 1, the top basins 104 are each positioned above the packing 106. Referring to FIG. 1, the top basins 104 are positioned above the interior 113 of the housing 102, in particular above the inlets 103I of the housing 102. When stored (at least transiently) within the top basins 104, the CO₂ capture solution 114 is positioned to be circulated (e.g., through pumping or gravity flow or both) downwards, through the packing 106 and eventually into the bottom basin 110. As the CO₂ capture solution 114 is circulated through and over the packing 106, the CO₂-laden air 101 is circulated through the packing 106 to contact the CO₂ capture solution 114, through the plenum 108, and to an ambient environment as the CO₂-lean gas 105. A process stream is formed by contacting the CO₂-laden air 101 and the liquid CO₂ capture solution 114, where the process stream is or includes the CO₂-laden capture solution 111 having CO₂ absorbed from the CO₂-laden air 101 by the CO₂ capture solution 114. The top basins 104 may each have any suitable form or feature for distributing the CO₂ capture solution 114 over the packing 106. For example, and referring to FIG. 1, the top basins 104 each have top basin nozzles 104N which help to distribute the CO₂ capture solution 114 over the packing 106. The top basin nozzles 104N may eject the CO₂ capture solution 114 under pressure resulting from the gravitational head of the CO₂ capture solution 114 within the top basins 104 and/or from any pumping pressure. In the example implementation of the gas-liquid contactor 100 of FIG. 1, the basins 109 include two top basins 104. Each top basin 104 is positioned above one of the packing sections 106A, 106B to distribute the CO₂ capture solution 114 to the respective packing section 106A, 106B. The top basins 104 of FIG. 1 are fluidly isolated from one another (i.e. no fluid communication between the two top basins 104). Other configurations and numbers of the top basins 104 are possible.

Referring to FIG. 1, the one or more bottom basins 110 are positioned at the bottom of the gas-liquid contactor 100 opposite the top basins 104. As can be seen in FIG. 1, the bottom basin 110 is positioned below the packing 106 and below the housing 102. In particular, the bottom basin110 is positioned below the interior 113 of the housing 102. The bottom basin 110 acts as a collection tank for the process stream (e.g. the CO₂-laden capture solution 111). The CO₂-laden capture solution 111 including absorbed CO₂, as well as unreacted CO₂ capture solution 114, collects in the bottom basin110, and may then be pumped or otherwise moved out of the bottom basin 110 for further processing. For example, the liquids collected in the bottom basin 110 may be processed and then pumped for redistribution over the packing 106 for use in CO₂ capture. In another possible implementation, some or all of the liquids collected in the bottom basin 110 is pumped to the top basins 104 without being processed, for redistribution over the packing 106 for CO₂ capture. The bottom basin 110 can be compatible with and prevent loss of containment of various CO₂ capture solutions 114, many of which have corrosive, caustic or high pH properties. In some aspects, as described more fully below, the bottom basin 110 can be lined or coated with one or more materials that are resistant to caustic induced corrosion or degradation. In some implementations of the gas-liquid contactor 100, components can be kept out of the bottom basin 110 holding the CO₂ capture solution 114. Additionally, the gas-liquid contactor 100 can be designed to keep most or all the structural components out of the wettable area of the housing 102, e.g., any portion of the housing 102 that is in contact with the CO₂ capture solution 114. Examples of wettable areas of the housing 102 includes those supporting the packing 106. FIG. 1 depicts a single bottom basin 110. However, other configurations and numbers of bottom basins 110 are possible.

Referring to FIG. 1, the CO₂ capture solution 114 flows over the packing 106 in a direction that is substantially perpendicular or transverse to the average direction along which the CO₂-laden air 101 circulates through the packing 106, also known as a "cross flow" configuration. In another possible implementation, the CO₂ capture solution 114 flows over the packing 106 in a direction that is opposite to the average direction along which the CO₂-laden air 101 circulates through the packing 106, also known as a "counter flow" configuration. In another possible implementation, the CO₂ capture solution 114 flows over the packing 106 in a direction that is parallel with the direction along which the CO₂-laden air 101 circulates through the packing 106, also known as a "cocurrent flow" configuration. In another possible configuration, the CO₂ capture solution 114 flows over the packing 106 according to a configuration that is a combination of one or more of cross flow, counter flow and cocurrent flow configurations.

The basin 109 may be made of any material capable of receiving and containing process solutions. For example, in some implementations, the bottom basin 110 has a material of construction (MOC) that is a concrete substrate. The concrete substrate may have an applied coating, where the coating is one of high density polyethylene (HDPE), polyurethane-based, and vinyl ester. Non-limiting examples of coatings resistant to caustic solutions include Ucrete UD200, which is a polyurethane-based coating system that can be trowel applied; Ceilcote 242/242MR Flakeline, which is a vinyl ester based composite system that can be sprayed or roller applied; and Dudick - Protecto-Flex 100XT, which is a trowel applied, epoxy based, fibreglass reinforced + novolac epoxy topcoat. The coating may be applied to a top or exposed interior, wettable surface of concrete substrate of the bottom basin 110. The concrete substrate may have an applied liner or lining, such as a stainless steel lining. These materials for the bottom basin 110 may allow it to better resist and endure the potentially corrosive effects of the CO₂ capture solution 114 held therein, particular in configurations where the CO₂ capture solution 114 is a caustic solution. In another possible implementation, the bottom basin 110 is made of stainless steel for a caustic based CO₂ capture solution 114. In another possible implementation, caustic resistant plastics are used for the bottom basin 110, such as HDPE. Such an HDPE bottom basin 110 may have additional structural integrity components coupled to the HDPE bottom basin 110 (or to the gas-liquid contactor 100, or to both), such as one or more earth berms, one or more lock blocks, or a combination thereof. In some cases, the bottom basin 110 can have a liner underneath the bottom basin 110 to serve as a leakage barrier in case the bottom basin 110 is damaged. The top basins 104, and indeed any of the other basins 109 described herein, may be similarly constructed or have similar materials.

The gas-liquid contactor 100 may include supports positioned within the packing 106 between the top basins 104 and bottom basin 110. For example, the packing 106 can include additional support for a specific portion of the packing 106, such as for an upper portion of the packing 106, so that the loads (e.g. the weight of the portion of packing 106 when dry plus the weight of the liquid hold up of the CO₂ capture solution 114 on the portion of the packing 106) do not bear upon another portion of the packing 106 (e.g. a bottom portion of the packing 106). For example, a 7.3 m (24 ft.) tall packing 106 may comprise two (a top and a bottom) portions of packing (each 3.7 m (12 ft.) tall), and the support can be provided between the two portions of packing 106. In another example, the packing 106 has a total packing height ranging from about 15 m (50 feet) to about 26 m (85 feet) and includes two or more (e.g. a top and a bottom, or top, bottom, and middle) portions of packing each having heights less than the total packing height, and the support can be provided between the portions of packing 106. In some aspects, the packing 106 may not include the support. The basins 109 may include one or more redistribution basin(s) positioned in at a location between the top and bottom of the packing 106 (for example, between the top basin 104 and the bottom basin 110) to re-distribute the CO₂ capture solution 114 over the remaining packing sections. In example aspects, the redistribution basin can be positioned in the packing 106. The redistribution basin can divide the packing 106 into at least a top section and a bottom section, an example of which is shown in FIG. 4C. The redistribution basin can include nozzles that spray the CO₂ capture solution 114 on a packing section underneath the redistribution basin. The CO₂ capture solution 114 can be pumped into this redistribution basin from the bottom basin 110. Alternatively, the CO₂ capture solution 114 that is distributed over a top packing section from the top basin 104 could be collected in the redistribution basin, and then sprayed using nozzles onto a bottom packing section positioned underneath the redistribution basin. In some aspects, at least one structural support can be positioned between the packing sections of packing 106.

Referring to FIG. 1, the flow system 120 includes one or more liquid distribution pipes 412 to direct the CO₂ capture solution 114 and/or the CO₂-laden capture solution 111. The liquid distribution pipes 412 can form a network of pipes, some of which may be in fluid communication, and which may allow for parallel or series flow of liquid. Some of the liquid distribution pipes 412 have pipe outlets or openings through which the CO₂ capture solution 114 flows. Referring to FIG. 1, some of the outlets of the pipes are defined or formed by one or more turbine nozzles 416 that are configured to direct the CO₂ capture solution 114 under pressure as a pressurized flow 417 against another component of the gas-liquid contactor 100 to impart a force to the other component, as described in greater detail below. The liquid distribution pipes 412 may be fluidly coupled to the basins 109. For example, the liquid distribution pipes 412 may be in fluid communication with the bottom basin 110, and a portion of the liquid may be pumped from the bottom basin 110, through the liquid distribution pipes 412, and out the one or more turbine nozzles 416. In another example, the liquid distribution pipes 412 are in fluid communication with a source of "fresh" or regenerated CO₂ capture solution 114, which is pumped through the liquid distribution pipes 412, and out the turbine nozzles 416.

Referring to FIG. 1, the flow system 120 includes one or more pumps 422. The pumps 422 function to move liquids under pressure, such as the CO₂ capture solution 114 or the CO₂-laden capture solution 111, from their source to where they are used. One example of the pumps 422 functioning in this manner is when the pumps 422 flow the CO₂ capture solution 114 through the liquid distribution pipes 412 and to the turbine nozzles 416. Since the CO₂ capture solution 114 is under pressure within the liquid distribution pipes 412, the CO₂ capture solution 114 is ejected as the pressurized flow 417 from the turbine nozzles 416 so that it can impart a force on another component of the gas-liquid contactor 100, as described in greater detail below. The pumps 422 may also function to move liquids to other destinations. Some non-limiting examples of such functions of the pumps 422 include moving the CO₂ capture solution 114 to the top basins 104, and moving the CO₂ capture solution 114 and/or the CO₂-laden capture solution 111 from the bottom basin 110 for processing or redistribution over the packing 106. The pumps 422 may thus be used to move liquid to, from and within the gas-liquid contactor 100. A control system (e.g., control system 999) may be used to control the flow of fluid by the pumps 422. For example, a control system can be used to control the pump 422 in order to pump the CO₂ capture solution 114 through the liquid distribution pipes 412 at a particular velocity in order to generate a desired fluid pressure of the CO₂ capture solution 114 flowing out of the turbine nozzles 416. The pumps 422 can also be controlled such that a constant velocity of flow is provided into the liquid distribution pipes 412 regardless of changes of liquid flow throughout the gas-liquid contactor 100.

The pumps 422 may help to distribute the CO₂ capture solution 114 over the packing 106 at relatively low liquid flow rates, which may help to reduce costs associated with pumping or moving the CO₂ capture solution 114. Further, low liquid flow rates of the CO₂ capture solution 114 over the packing 106 may result in a lower pressure drop of the CO₂-laden air 101 as it flows through the packing 106, which reduces the energy requirements of the device used for moving the CO₂-laden air 101 across the packing 106 (e.g. hydraulic fan 404 described below). The pumps 422 may be configured to generate intermittent or pulsed flow of the CO₂ capture solution 114 over the packing 106, which may allow for intermittent wetting of the packing 106 using relatively low liquid flows. The CO₂ capture solution 114 sprayed, flowed, or otherwise distributed over the packing 106 is collected in the bottom basin 110 and may then be moved by the pumps 422 back to the top basin 104, or sent downstream for processing.

The liquid process streams in the gas-liquid contactor 100, as well as process streams within any downstream processes with which the gas-liquid contactor 100 is fluidly coupled, can be flowed using one or more flow control systems (e.g., control system 999). A flow control system can include one or more flow pumps (including or in addition to the pumps 422), fans, blowers, or solids conveyors to move the process streams, one or more flow pipes through which the process streams are flowed and one or more valves to regulate the flow of streams through the pipes. Each of the configurations described herein can include at least one variable frequency drive (VFD) coupled to a respective pump that is capable of controlling at least one liquid flow rate. In some implementations, liquid flow rates are controlled by at least one flow control valve.

In some embodiments, a flow control system can be operated manually. For example, an operator can set a flow rate for each pump or transfer device and set valve open or close positions to regulate the flow of the process streams through the pipes in the flow control system. Once the operator has set the flow rates and the valve open or close positions for all flow control systems distributed across the system, the flow control system can flow the streams under constant flow conditions, for example, constant volumetric rate or other flow conditions. To change the flow conditions, the operator can manually operate the flow control system, for example, by changing the pump flow rate or the valve open or close position.

In some embodiments, a flow control system can be operated automatically. For example, the flow control system can be connected to a computer or control system (e.g., control system 999) to operate the flow control system. The control system can include a computer-readable medium storing instructions (such as flow control instructions and other instructions) executable by one or more processors to perform operations (such as flow control operations). An operator can set the flow rates and the valve open or close positions for all flow control systems distributed across the facility using the control system. In such embodiments, the operator can manually change the flow conditions by providing inputs through the control system. Also, in such embodiments, the control system can automatically (that is, without manual intervention) control one or more of the flow control systems, for example, using feedback systems connected to the control system. For example, a sensor (such as a pressure sensor, temperature sensor or other sensor) can be connected to a pipe through which a process stream flows. The sensor can monitor and provide a flow condition (such as a pressure, temperature, or other flow condition) of the process stream to the control system. In response to the flow condition exceeding a threshold (such as a threshold pressure value, a threshold temperature value, or other threshold value), the control system can automatically perform operations. For example, if the pressure or temperature in the pipe exceeds the threshold pressure value or the threshold temperature value, respectively, the control system can provide a signal to the pump to decrease a flow rate, a signal to open a valve to relieve the pressure, a signal to shut down process stream flow, or other signals.

The gas-liquid contactor 100 has a gas-circulating device which functions to move or circulate gas flows into and out of the gas-liquid contactor 100. In the implementation of the gas-liquid contactor of FIG. 1, the gas-circulating device of the gas-liquid contactor 100 is a hydraulic fan 402. As described in greater detail below, the hydraulic fan 402 functions to circulate gases like ambient air, such that the CO₂-laden air 101 is caused by the hydraulic fan 402 to flow into the gas-liquid contactor 100, and such that the CO₂-lean gas 105 is caused by the hydraulic fan 402 to be discharged from the gas-liquid contactor 100. The hydraulic fan 402 thus functions to circulate the CO₂-laden air 101 and the CO₂-lean gas 105 in the manner described herein.

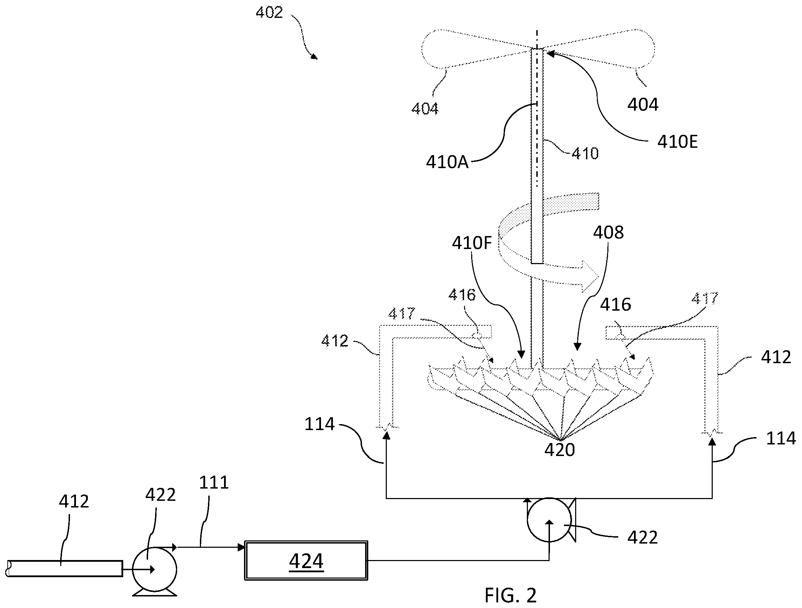

Referring to FIG. 2, the hydraulic fan 402 has a shaft 410 that is rotatable about a shaft axis 410A defined by the shaft 410. In the implementation of the hydraulic fan 402 depicted in FIG. 2, the shaft axis 410A has an upright or vertical orientation. Other orientations for the shaft 410 and for the shaft axis 410A are possible, as described in greater detail below. The shaft 410 is a linearly-extending, elongated body defined between opposed shaft ends 410E, 410F. The shaft 410 may have other shapes, and may be angled or curved at any portion along its length between the shaft ends 410E, 410F.

The hydraulic fan 402 has a plurality of fan blades 404 that are coupled to the shaft 410. In the implementation of the hydraulic fan 402 of FIG. 2, the fan blades 404 are coupled to one of the shaft ends 410E, 410F. In the implementation of the hydraulic fan 402 of FIG. 2, the fan blades 404 are coupled to the uppermost shaft end 410E. In another possible implementation, the fan blades 404 are coupled to the shaft 410 at a location along the shaft axis 410A that is between the shaft ends 410E, 410F. In another possible implementation, the fan blades 404 are provided in multiple sets of fan blades 404, where each set of fan blades 404 is coupled to the shaft 410 at a unique axial position along the shaft axis 410A. The fan blades 404 may be coupled to the shaft 410 directly, or via an intermediate structural component such as a hub which is itself coupled to the shaft 410. Irrespective of the manner by which they are coupled to the shaft 410, the fan blades 404 are coupled to the shaft 410 to rotate with the shaft 410 about the shaft axis 410A. The fan blades 404 are positioned adjacent to the one or more outlets 1030. This positioning of the fan blades 404 may take different configurations. For example, and referring to FIG. 1, the fan blades 404 are positioned at the end of the fan stack 107 that defines the outlet 1030 and function to induce a flow of the CO₂-lean gas 105 through the outlet 1030. In another possible configuration, the fan blades 404 are positioned between opposite ends of the fan stack 107 and upstream of the outlet 1030, such that the fan blades 404 function to flow the CO₂-lean gas 105 through the outlet 1030. Rotation of the fan blades 404 about the shaft axis 410A causes gases to circulate into the inlets 103I and through the gas-liquid contactor 100. For example, in the implementation of the gas-liquid contactor of FIG. 1, rotation of the fan blades 404 causes the CO₂-laden air 101 to be drawn into the gas-liquid contactor 100, and causes the CO₂-lean gas 105 to be discharged from the gas-liquid contactor 100. The fan blades 404, individually or collectively, may have any shape (e.g. chord, camber, span, twist, curvature, etc.) desired to achieve the functionality of the fan blades 404 described herein. The fan blades 404 may be sized so as to provide the hydraulic fan 402 with a fan diameter up to 18 m (60 ft.). In some implementations, the fan blades 404 are sized so as to provide the hydraulic fan 402 with a fan diameter between 3 m (10 ft.) and 18 m (60 ft).

The hydraulic fan 402 is driven by a liquid under pressure, specifically, by the pressurized flow 417 of the CO₂ capture solution 114 impacting a hydraulic turbine 408 of the hydraulic fan 402. Referring to FIG. 2, the hydraulic turbine 408 is coupled to the shaft 410, and is rotatable with the shaft 410 and with the fan blades 404 about the shaft axis 410A. In the implementation of the hydraulic fan 402 of FIG. 2, the hydraulic turbine 408 is coupled to one of the shaft ends 410F that is opposite to the shaft end 410E to which the fan blades 404 are coupled. The hydraulic turbine 408 and fan blades 404 are spaced apart from each other along the shaft axis 410A. In another possible implementation, the hydraulic turbine 408 is coupled to the shaft 410 at a location along the shaft axis 410A that is between the shaft ends 410E, 410F. The hydraulic turbine 408 includes a plurality of turbine blades 420 positioned, shaped and sized to receive the pressurized flow 417 exiting the turbine nozzles 416. The turbine blades 420 may have any shape, size or configuration to achieve the functionality ascribed to the turbine blades 420 herein. For example, in implementations where the hydraulic turbine 408 is a Pelton Wheel or Pelton Turbine, the turbine blades 420 are buckets, shells or have another concave shape. In other implementations of the hydraulic turbine 408, the turbine blades 420 are vanes with flat or curved planar shapes. Other possible implementations for the hydraulic 23 turbine 408 include as a Francis Turbine. Other possible implementations for the hydraulic turbine 408 include as a Kaplan Turbine.

Referring to FIG. 2, the hydraulic turbine 408 is positioned adjacent to the turbine nozzles 416. Different configurations of this positional relationship are possible. In one possible configuration, and referring to FIG. 2, the turbine nozzles 416 are positioned vertically above the hydraulic turbine 408, and function to eject the pressurized flow 417 downwardly onto the turbine blades 420. In another possible configuration, the turbine nozzles 416 are positioned beneath the hydraulic turbine 408, and function to eject the pressurized flow 417 upwardly against the turbine blades 420. In another possible configuration, the turbine nozzles 416 lie in the same plane as the hydraulic turbine 408, and function to eject the pressurized flow 417 in a direction parallel to the plane against the turbine blades 420 (for example, in a Francis Turbine configuration). Referring to FIG. 2, in order to operate the hydraulic fan 402 to circulate gases through and out of the gas-liquid contactor 100, the CO₂ capture solution 114 is conveyed by the pumps 422 through the liquid distribution pipes 412 to be ejected from the turbine nozzles 416 as the pressurized flow 417. The turbine nozzles 416 are positioned, oriented or otherwise configured to direct the pressurized flow 417 against the surfaces of the turbine blades 420 of the hydraulic turbine 408, thereby imparting a force on the turbine blades 420 which causes the hydraulic turbine 408, and thus the fan blades 404 and the shaft 410 connected to the hydraulic turbine 408, to rotate about the shaft axis 410A. Referring to FIG. 1, rotation of the fan blades 404 causes circulation of the CO₂-laden air 101 through the packing 106, and also causes circulation of the CO₂-lean gas 105 through the outlet 1030. The fan blades 404 discharge the CO₂-lean gas 105 from the gas-liquid contactor 100 as a gas plume.

Referring to FIG. 1, the hydraulic fan 402 is positioned above the plenum 108 such that all of the components of the hydraulic fan 402 are at a higher elevation than the plenum 108, and are positioned directly above the plenum 108. In another possible implementation, one or more components of the hydraulic fan 402, such as the hydraulic turbine 408, is positioned within the plenum 108 below an uppermost edge of the packing 106. Referring to FIG. 1, the fan blades 404 are located above the plenum 108. Referring to FIG. 1, the fan blades 404 are located at a height measured from the ground that is greater than the height of the plenum 108, and greater than a height of the packing 106. Referring to FIG. 1, in an example implementation of the hydraulic fan 402, the hydraulic fan 402 is positioned above the top basins 104. Referring to FIG. 1, all of the components of the hydraulic fan 402 are at a higher elevation than the top basins 104, and are positioned directly above the bottom basin 110. In another possible implementation, one or more components of the hydraulic fan 402, such as the hydraulic turbine 408, is positioned between and above the top basins 104. Referring to FIG. 1, the fan blades 404 are located above the top basins 104. Referring to FIG. 1, the fan blades 404 are located at a height measured from the ground that is greater than the height of the top basins 104. The shaft 410 and shaft axis 410A have a vertical or upright orientation, and the fan blades 404 are positioned above the hydraulic turbine 408.

Referring to FIG. 1, the one or more basins 109 of the flow system 120 include one or more turbine basins 115. The turbine basin115 operate as a reservoir or tank to collect, hold and distribute the CO₂ capture solution 114 from the hydraulic turbine 408, after the pressurized flow 417 from the nozzles 416 has been used to impart rotation to the hydraulic turbine 408. The turbine basin 115 may have different forms to achieve this functionality. For example, and referring to FIG. 1, the turbine basin 115 includes turbine basin walls 115W that surround the hydraulic turbine 408, and which extend upwardly vertically past the hydraulic turbine 408. The turbine basin walls 115W function to contain the CO₂ capture solution 114 that is ejected or spun off the hydraulic turbine 408 as it rotates, so that the CO₂ capture solution 114 remains within the turbine basin 115. The turbine basin walls 115W are connected to a turbine basin base 115B that, with the turbine basin walls 115W, forms the reservoir for containing the CO₂ capture solution 114 after it has been used by hydraulic turbine 408. One or more turbine basin outlets 1150 are formed in the turbine basin walls 115W and/or in the turbine basin base 115B. In the implementation of the turbine basin 115 of FIG. 1, the turbine basin 115 has multiple turbine outlets 1150. The turbine basin outlets 1150 allow the turbine basin 115 to distribute the CO₂ capture solution 114 for eventual use in capturing CO₂ from the CO₂-laden air 101. In the implementation of FIG. 1, the turbine basin outlet(s) 1150 are in fluid communication with one or more turbine basin distribution pipes 115P. Each turbine basin distribution pipe 115P extends from the turbine basin walls 115W and/or from the turbine basin base 115B to one or more turbine basin distribution nozzles 115N, to convey the CO₂ capture solution 114 from the turbine basin outlets 1150 to the turbine basin distribution nozzles 115N. In the implementation of FIG. 1, the turbine basin 115 is disposed above the top basins 104 and is in fluid communication with the top basins 104 and there are at least two turbine basin distribution nozzles 115N. Each turbine basin distribution nozzle 115N is positioned above one of the top basins 104. The turbine basin distribution nozzles 115N operate to distribute (spray, eject, drip, flow, etc.) the CO₂ capture solution 114 to the top basins 104 positioned beneath the turbine basin distribution nozzles 115N, so that the CO₂ capture solution 114 can be distributed from the top basins 104 over the packing 106 as described above.

In another possible implementation, each turbine basin distribution pipe 115P has an outlet free of any turbine basin distribution nozzles 115N, such that the CO₂ capture solution 114 is able to flow unrestricted as deluge flow from an outlet of each turbine basin distribution pipe 115P into a respective top basin 104. The turbine basin 115 may be open-topped or partially/fully covered. The pumps 422 may function to flow the CO₂ capture solution 114 to the turbine nozzles 416 only, such that the CO₂ capture solution 114 eventually flows into the top basins 104 for distribution over the packing 106. In another possible implementation, the pumps422 may function to flow the CO₂ capture solution 114 to both the turbine nozzles 416 and the top basins 104.

Other configurations for the turbine basin 115 are possible. For example, the turbine basin walls 115W form splash walls surrounding the hydraulic turbine 408 which are not connected to the turbine basin base 115B, such that turbine basin 115 is open along its bottom. In such an implementation, the turbine basin 115 is positioned directly above the top basins 104, such that the CO₂ capture solution 114 flowing off the hydraulic turbine 408 is confined by the splash walls and falls via gravity directly into the top basins 104. FIG. 1 depicts a single turbine basin 115, however, other configurations and numbers of turbine basins 115 are possible. In another possible configuration, the gas-liquid contactor 100 does not include the top basins 104, and the CO₂ capture solution 114 collected in the turbine basin 115 is distributed directly to the packing 106.

In some implementations, at a given reference temperature, the density of the CO₂ capture solution 114 is greater than the density of water at the same reference temperature. At comparable reference temperatures, in some implementations, the density of the CO₂ capture solution 114 is at least 10% greater than the density of water. In some implementations, at comparable reference temperatures, in some implementations, the density of the CO₂ capture solution 114 is approximately 10% greater than the density of water. The use of the CO₂ capture solution 114 as the working fluid of the hydraulic turbine 408 allows the hydraulic fan 402 to be driven by a liquid that is denser, and thus capable of transmitting more force per unit volume, than water at comparable conditions. The density and the viscosity of the CO₂ capture solution 114 can vary depending on the composition of the CO₂ capture solution 114 and the temperature. For example, at temperatures of 20°C to 0°C, the CO₂ capture solution 114 or the CO₂-laden capture solution 111 may comprise 1 M KOH and 0.5 M K₂CO₃ and may have a density ranging from 1115-1119 kg/m³ and a viscosity ranging from 1.3-2.3 mPa-s. In another example, at temperatures of 20°C to 0°C, the CO₂ capture solution 114 or the CO₂-laden capture solution 111 may comprise 2 M KOH and 1 M K₂CO₃, and may have a density ranging from 1260-1266 kg/m³ and a viscosity ranging from 1.8-3.1 mPa-s. In comparison, water has a density of 998 kg/m³ and viscosity of 1 mPa-s at 20°C. It can thus be appreciated that the liquid used to drive the hydraulic turbine 408 (e.g. the CO₂ capture solution 114 and/or the CO₂-laden capture solution 111) has a higher density than water, and is thus able to provide more motive force per volume compared to water when used as the fluid for driving the hydraulic turbine 408, resulting in better performance of the hydraulic fan 402 compared to a hydraulic fan system operated using water as the working fluid. By using the same liquid (e.g. the CO₂ capture solution 114 and/or the CO₂-laden capture solution 111) to drive the hydraulic fan 402 and to absorb CO₂ from the CO₂-laden air 101, the gas-liquid contactor 100 can avoid having to design, install, operate and maintain separate liquid distribution and storage systems for driving the hydraulic fan 402 and for CO₂ capture. Some examples of solutions which are used to drive the hydraulic fan 402 and for CO₂ capture include, but are not limited to, an aqueous alkaline solution, an aqueous amine solution, and an aqueous carbonate and/or bicarbonate solution, with or without containing promoters such as carbonic anhydrase.

In some implementations, the speed of rotation of the fan blades 404 about the shaft axis 410A is related to the flow rate of the pressurized flow 417 of the CO₂ capture solution 114 against the hydraulic turbine 408. The relationship between the flow rate (unit of volume per unit of time, e.g. m³/h or gpm) of the pressurized flow 417 and the rotational speed (angular, RPM) of the fan blades 404 allows for varying the speed of the fan blades 404 by varying the flow rate of the pressurized flow 417. Stated differently, the relationship between the flow rate of the pressurized flow 417 and the rotational speed of the fan blades 404 allows for controlling or setting the speed of the fan blades 404 (sometimes referred to herein as the "fan speed") using the pressurized flow 417. In implementations, the ratio of the fan speed to the speed of the hydraulic turbine 408 is 1:1. In some implementations, the fan speed is directly proportional to the volumetric flow rate of the pressurized flow 417.

Referring to FIG. 1, the pumps 422 are each configured to vary the pressurized flow 417 from the turbine nozzles 416 in order to vary the fan speed. The pumps 422 therefore allow for increasing the fan speed by increasing the flow rate of the pressurized flow 417 from the turbine nozzles 416. Similarly, the pumps 422 allow for decreasing the fan speed by decreasing the flow rate of the pressurized flow 417 from the turbine nozzles 416. Thus, in some implementations, the fan speed of the fan blades 404 increases and decreases proportionally with the change in flow rate of the pressurized flow 417 from the turbine nozzles 416. For example, when the flow rate of the pressurized flow 417 over the hydraulic turbine 408 is increased, there is a greater volume (and thus mass) of CO₂ capture solution 114 driving the hydraulic turbine 408, which causes the hydraulic turbine 408 to rotate faster about the shaft axis 410A and increase the fan speed of the fan blades 404. The increased fan speed will increase the speed of the gases flowing into the gas-liquid contactor 100 (e.g. CO₂-laden air 101), and increase the speed of the gases discharged from the gas-liquid contactor 100 (e.g. CO₂-lean gas 105). Similarly, by keeping the flow rate of the pressurized flow 417 over the hydraulic turbine 408 constant, the fan speed of the hydraulic fan 402, and thus the velocity of the CO₂-laden air 101 through the packing 106, can be held relatively constant regardless of changes in fluid flow through other parts of the gas-liquid contactor 100. In some implementations, and referring to FIG. 1, the hydraulic fan 402 is free of a gearbox. In some implementations, the ratio between the rotational speed of the hydraulic turbine 408 and the rotational speed of the fan blades 404 is 1:1.

The pumps 422 may be used to pump the CO₂ capture solution 114 through the liquid distribution pipes 412 and onto the hydraulic turbine 408 at a fluid pressure that is sufficient to generate the desired fan speed. Referring to FIG. 1, a control system (e.g., control system 999) can be used to control the flow of fluid onto the hydraulic turbine 408. For example, a control system can be used to control the pumps 422 in order to pump the CO₂ capture solution 114 and/or the CO₂-laden capture solution 111 through the liquid distribution pipes 412 at a particular flow rate to generate a desired nozzle pressure from the turbine nozzle(s) 416. The pumps 422 can also be controlled such that a constant flow rate of CO₂ capture solution 114 and/or the CO₂-laden capture solution 111 is provided into the liquid distribution pipes 412 and to the hydraulic turbine 408 regardless of changes in liquid flow throughout other portions of the gas-liquid contactor 100. By maintaining a constant flow over the hydraulic turbine 408, the speed of the hydraulic fan 402, and thus the ambient air velocity through the packing 106, can be held constant regardless of changes in fluid flow throughout the gas-liquid contactor system 100.

Referring to FIG. 1, the control system 999 and/or the pumps 422 may function to flow the CO₂ capture solution 114 through the liquid distribution pipes 412 to the turbine nozzles 416 at different flow rates, referred to herein as "turbine nozzle flow rates". The turbine nozzle flow rates include and are defined between a first turbine nozzle flow rate and a second turbine nozzle flow rate that is lower than the first turbine nozzle flow rate. In some implementations, the maximum value for the first turbine nozzle flow rate corresponds to a maximum fan speed. Beyond this maximum fan speed, the fan blades 404 may experience operational issues or reduced capacity. In some implementations, the minimum value for the second turbine nozzle flow rate is zero. The control system 999 and/or the pump(s) 422 may also allow for flowing the CO₂ capture solution 114 via the top basin nozzles 104N over the packing 106 at a first liquid loading rate and at a second liquid loading rate that is lower than the first liquid loading rate. In some implementations, the control system 999 and/or the pump(s) 422 may allow for flowing the CO₂ capture solution 114 via the top basin nozzles 104N over the packing 106 at a "pulsed" flow where the CO₂ capture solution 114 flows over the packing 106 at the lower second liquid loading rate (e.g. a zero flow rate) for a first time duration and then at the higher first liquid loading rate for a second time duration. This intermittent or "pulsed" flow of CO₂ capture solution 114 over the packing 106 may allow for a more economical use of the CO₂ capture solution 114 for capturing CO₂ from the CO₂ laden air 101 and may reduce energy requirements of the pump(s) 422, without incurring too high of a penalty in capture rates. In implementations of the gas-liquid contactor 100 where the turbine basin 115 distributes the CO₂ capture solution 114 flowing off the hydraulic turbine 408 to the top basins 104 positioned above the packing 106, such as shown in FIG. 1, the first liquid loading rate corresponds to the first turbine nozzle flow rate, in that the first liquid loading rate results from first turbine nozzle flow rate. Stated differently, if a higher or flush flow of the CO₂ capture solution 114 is desired over the packing 106, the pumps 422 may increase the turbine nozzle flow rate to the first turbine nozzle flow rate so that more CO₂ capture solution 114 flows off the hydraulic turbine 408 before collecting in the top basin(s) 104 for distribution over the packing 106. It may thus be possible to set or determine the first liquid loading rate by setting the first turbine nozzle flow rate.

The second liquid loading rate may or may not correspond to the second turbine nozzle flow rate. For example, the second liquid loading rate might be zero, but the second turbine nozzle flow rate might be greater than zero and the CO₂ capture solution 114 may be diverted away from the top basins 104. In another example, the second liquid loading rate is substantially zero, the pumps 422 are applying a non-zero second turbine nozzle flow rate to maintain a desired fan speed, and the CO₂ capture solution 114 is sent from the turbine basin 115 away from the top basins 104. The top basins 104 may include one or more liquid bypass devices, such as a bypass valve or a control valve, to bypass the CO₂ capture solution 114 away from the packing 106 and allow for controlling the fan speed independently of the flow of CO₂ capture solution 114 over the packing 106. As a result, a continuous flow of the pressurized flow 417 of CO₂ capture solution 114 can be provided to the hydraulic turbine 408 in order to continuously operate the hydraulic fan 402, while the flow of CO₂ capture solution 114 onto the packing 106 can be non-continuous (e.g., pulsed). In some implementations, when providing a pulsed or varied flow of the CO₂ capture solution 114 onto the packing 106, a portion of the CO₂ capture solution 114 emitted by the turbine nozzles 416 against the hydraulic turbine 408 is directed onto the packing 106, while another portion of the CO₂ capture solution 114 emitted by the turbine nozzles 416 against the hydraulic turbine 408 is diverted away from packing 106 to another location, such as to the bottom basin 110. For example, during low flow, trickle flow, or no flow portions of the operation cycle of the gas-liquid contactor 100, some or all of the CO₂ capture solution 114 applied to the hydraulic turbine 408 is diverted away from the packing 106 and directed into the bottom basin 110 without flowing through the packing 106. It may also be desirable to bypass the flow of the CO₂ capture solution 114 around the packing 106 for other reasons, such as when performing maintenance on the packing 106. In some implementations, the turbine basin 115 may include one or more liquid bypass devices, such as a bypass valve or a control valve, to bypass the CO₂ capture solution 114 away from the hydraulic turbine 408.

In some implementations, the turbine nozzle flow rates, the liquid loading rates, and the fan speed are all related. For example, the pumps 422 can function to increase the turbine nozzle flow rate from the turbine nozzles 416 to the first turbine nozzle flow rate to achieve the higher first liquid loading rate, as explained above. Increasing the turbine nozzle flow rate to the first turbine nozzle flow rate will also increase the speed of rotation of the fan blades 404, allowing for increasing the speed of the gases flowing into the gas-liquid contactor 100 (e.g. CO₂-laden air 101), and increasing the speed of the gases discharged from the gas-liquid contactor 100 (e.g. CO₂-lean gas 105). The gas-liquid contactor 100 and/or the hydraulic fan 402 may be designed and constructed so that variations in fan speed are confined to the structural limits of the fan blades 404. For example, the pumps 422 may be sized to generate the pressurized flow 417 that is equal to or below a maximum turbine nozzle flow rate that corresponds to a maximum fan speed. In some implementations, the control system 999 is configured to operate the pumps 422 to limit the pressure of the pressurized flow 417 to be equal to or below a maximum turbine nozzle flow rate that corresponds to a maximum fan speed.

When the flow rate of CO₂ capture solution 114 over the packing 106 is increased, the CO₂-laden air 101 flowing across the packing 106 may experience an increased pressure drop. The increased pressure drop causes a decrease in the velocity of the CO₂-laden air 101 flowing across the packing 106, and a decrease in the discharge velocity of the CO₂-lean gas 105 leaving the gas-liquid contactor 100. As a result, decreases in the speed of the CO₂-laden air 101 flowing across the packing 106 may decrease CO₂ capture efficiency. The decrease in the discharge velocity of the CO₂-lean gas 105 may cause some or all of the plume of CO₂-lean gas 105 to be ingested into the gas-liquid contactor 100, which may decrease the overall CO₂ capture efficiency of the gas-liquid contactor 100.

The flow system 120 and the hydraulic fan 402 allow the gas-liquid contactor 100 to compensate for this increased pressure drop in the CO₂-laden air 101 flowing across the packing 106 that may result from an increased flow of CO₂ capture solution 114 over the packing 106, so as to maintain a desired speed of CO₂-laden air 101 flowing across the packing 106 and of CO₂-lean gas 105 discharged from the gas-liquid contactor 100. In implementations of the gas-liquid contactor 100 where the turbine basin 115 distributes the CO₂ capture solution 114 flowing off the hydraulic turbine 408 to the top basins 104 positioned above the packing 106, such as shown in FIG. 1, the higher flow rate of CO₂ capture solution 114 over the packing 106 results from an upstream increase in the volume of CO₂ capture solution 114 used to drive the hydraulic turbine 408, such that the hydraulic fan 402 is operating at higher fan speeds and circulating air at higher speeds so as to compensate for, or overcome, any decreased air speed resulting from the increased pressure drop. Thus, the speed of the hydraulic fan 402 may be linked to the flow rate of CO₂ capture solution 114 over the packing 106 such that higher solution flow rates over the packing 106 that cause lower air speeds across the packing 106 are the result of higher solution flow to the hydraulic turbine 408 which also cause higher fan speeds to overcome the lower air speeds. This "built-in" or "self-correcting" functionality of the hydraulic fan 402 contrasts with other types of fans or blowers whose speeds do not vary based on solution flow over the packing 106. For example, some electric fans are programmed or otherwise designed to constantly run at a maximum rotational speed that is a function of the tip speed of the fan blades that can be structurally supported. For such electric fans, if there is a pressure drop of air through the packing due to an increase in solution flow over the packing, it may not be possible to increase the fan speed to compensate for lower air speeds across the packing. Thus, airflow through the packing will decrease which ultimately may result in a reduced average volume of air processed by the system, and discharge air velocity will decrease which may result in more plume ingestion.

In contrast, the hydraulic fan 402 may be used to maintain a relatively constant velocity of gases through the gas-liquid contactor 100 during a flush (i.e. high) flow stage of operation of the gas-liquid contactor 100, which may help maintain air processing during the flush flow stage of operation. In addition, the gas-liquid contactor 100 with the hydraulic fan 402 may maintain a relatively constant velocity of air flow across the gas-liquid contactor 100 even with higher pressure differentials, compared to a system using a fan whose speed does not vary with the flow of solution over packing (e.g. an electric fan). The hydraulic fan 402 may thus allow for achieving close to desired air velocity through the packing 106 even when the flow rate of CO₂ capture solution 114 over the packing 106 is increased, due to the self-correction ability of the hydraulic fan 402 to provide more fan speed when it is needed in situations of higher solution flow over the packing 106. Thus, the fan speed of the hydraulic fan 402 is dynamically controlled without having to rely on other devices, such as a variable frequency drive (VFD) or two speed motor. As a result of the increased performance associated with the gas-liquid contactor 100 with the hydraulic fan 402, the total number of gas-liquid contactors 100 needed in a DAC system 9100 to capture the same amount of CO₂ could be reduced. In some implementations, the hydraulic fan 402 can have a fan diameter (e.g. up to 60 ft) that is larger than the fan diameter that can be achieved for a fan driven by an electric motor, because it may be impractical or cost prohibitive to drive a large fan with an electric motor and all the required mechanical intervening components (e.g. gear box, gear box shafts, bevel gears, etc.). In implementations described herein where the hydraulic fan 402 is part of a gas-liquid contactor 100 used in a DAC system 9100, the larger-diameter hydraulic fans 402 may allow for larger cells of gas-liquid contactors 100, thereby allowing for reducing the total number of gas-liquid contactors 100 need in the DAC system 9100. The operational costs and maintenance requirements of a gas-liquid contactor 100 with the hydraulic fan 402 may be lower than those of a gas-liquid contactor system that utilizes electric fans which have corresponding gear boxes and motors.

Referring to FIG. 2 and FIG. 8, some or all of the CO₂-laden capture solution 111 is sent downstream of the gas-liquid contactor 100 to be processed and regenerated. The pumps 422 may be used to flow the CO₂-laden capture solution 111 through the liquid distribution pipes 412 to a regeneration system 424. The regeneration system 424 may be part of the gas-liquid contactor 100 or separate therefrom. The regeneration system 424 functions to process the CO₂-laden capture solution 111 (e.g., spent capture solution) to recover and/or concentrate the CO₂ content contained within the CO₂-laden capture solution 111. The regeneration system 424 regenerates the CO₂-laden capture solution 111 and provides a CO₂-lean liquid which the pumps 422 flow back to the gas-liquid contactor 100 via the liquid distribution pipes 412 to be used as the CO₂ capture solution 114. The regeneration system 424 may include a single component, intermediate components like storage vessels, and/or an assembly of components which function cooperatively to regenerate the CO₂-laden capture solution 111. For example, the regeneration system 424 may be, or include, components such as a pellet reactor 9110 to grow calcium carbonate pellets, or an electrochemical system, such as electrochemical system 1650 depicted in FIG. 8. In another possible implementation, the regeneration system 424 may be, or include, components such as a calciner (such as calciner 2120 of FIG. 8) to calcine calcium carbonate to produce a stream of gaseous CO₂ and a stream of calcium oxide (CaO). It will be appreciated that the pumps 422 which flow liquids to and from the regeneration system 424 may include one or more pumps 422 that are part of or separate from the gas-liquid contactor 100. In some implementations, the pumps 422 flows the CO₂-laden capture solution 111 from the bottom basin(s) 110 to the regeneration system 424 as to regenerate the CO₂-laden capture solution 111 by concentrating the CO₂ content contained within the CO₂-laden capture solution 111 or by removing the CO₂ content contained within the CO₂-laden capture solution 111, thereby forming the CO₂-lean liquid. Pumps, such as the pumps 422 and/or pumps of the regeneration system 424, then flow the CO₂-lean liquid (i.e. regenerated CO₂ capture solution 114) back to the gas-liquid contactor 100 so that it can flow into the liquid distribution pipes 412 for distribution to the turbine nozzle(s) 416 to be emitted as the pressurized flow 417.

Another issue specific to DAC systems 9100 is the prevention of plume ingestion (sometimes referred to herein as "plume re-ingestion" or simply "re-ingestion"), given the unique properties of DAC plume. For example, the plume of CO₂-lean gas 105 exiting the gas-liquid contactor 100 tends to be cooler and less buoyant than the plumes exiting cooling towers. In some DAC systems 9100, the gas-liquid contactor 100 continuously pulls in fresh air (e.g. CO₂-laden air 101) for CO₂ capture through the sides of the gas-liquid contactor 100, and vents the CO₂ -lean gas 105 at the top of the gas-liquid contactor 100 through the fan stack 107. The sides of the gas-liquid contactor 100 are perpendicular to the ground, such that the direction of the air pulled into the gas-liquid contactor 100 is parallel to the ground (e.g., crossflow design gas-liquid contactor 100). The wind direction may cause the CO₂-lean gas 105 (e.g., low-CO₂ air) to be drawn back into the inlet 103I of the gas-liquid contactor 100 inlet. This phenomenon is known as plume ingestion, where the low-CO₂ exiting the gas-liquid contactor 100 is referred to as plume. In another scenario, when multiple gas-liquid contactors 100 are used as part of a DAC system 9100 for CO₂ capture from the air, the plume from the outlet of one gas-liquid contactor 100 may enter the inlet 103I of another gas-liquid contactor 100. Since the mass transfer in a gas-liquid contactor 100 is dependent on CO₂ concentration of the incoming air, ingestion of the plume reduces the amount of CO₂ captured in the gas-liquid contactor 100, thus reducing the overall CO₂ capture efficiency of the DAC system 9100.

The gas-liquid contactor 100 described herein includes one or more design considerations to avoid or reduce plume ingestion. Referring to FIG. 1, the fan stack 107 may have dimensions, in particular a height, that are greater than industry standard dimensions, particularly for cooling tower applications. In some implementations, the fan stack 107 is at least 4 times taller than the standard industry height of cooling tower stack. In some implementations, the height of the fan stack 107 is between 3 m (10 feet) and 15 m (50 feet). In some implementations, the height of the fan stack 107 is between 3 m (10 feet) and 12 m (40 feet). In some implementations, the height of the fan stack 107 is between 3 m (10 feet) and 9 m (30 feet). Having a fan stack 107 with a height of at least 3 m (10 feet) may help to avoid the plume of CO₂-lean gas 105 emitted from the fan stack 107 from being circulated back into the packing 106 by the hydraulic fan 402. Stated differently, having a fan stack 107 with a height of at least 3 m (10 feet) may help to reduce or avoid the plume of CO₂-lean gas 105 emitted from the fan stack 107 being ingested by the gas-liquid contactor 100. Having a fan stack 107 with a height of between 3-9 m (10-30 feet) may help to avoid ingestion of the plume of CO₂-lean gas 105, while also keeping material and construction costs related to the fan stack 107 to a minimum. The taller fan stack 107 may allow for the CO₂-lean gas 105 to disperse in the ambient environment before settling down or being ingested into the gas-liquid contactor 100.

Another possible design consideration to help avoid or reduce plume ingestion involves increasing the exit velocity of CO₂-lean gas 105 discharged from the fan stack 107, such that the CO₂-lean gas 105 exiting the fan stack 107 has a high momentum to escape the gas inlet zones adjacent to the inlets 103I of the gas-liquid contactor 100. Increased discharged velocity can be attained by reducing the cross-sectional area of the outlet of the fan stack 107. For example, the velocity of the CO₂-lean gas 105 may be doubled by reducing the cross-sectional area of the outlet 1030 of the fan stack 107 by half. Alternatively, a design for the hydraulic fan 402 can be selected that allows for increased exit velocity of the CO₂-lean gas 105 or for maintaining a fixed velocity of the CO₂-lean gas 105 even with higher pressure differentials across the packing 106, as described above. The fan design may have a different diameter, additional turbine blades 420, and/or a different design for the pitch, camber, etc. of the fan blades 404.

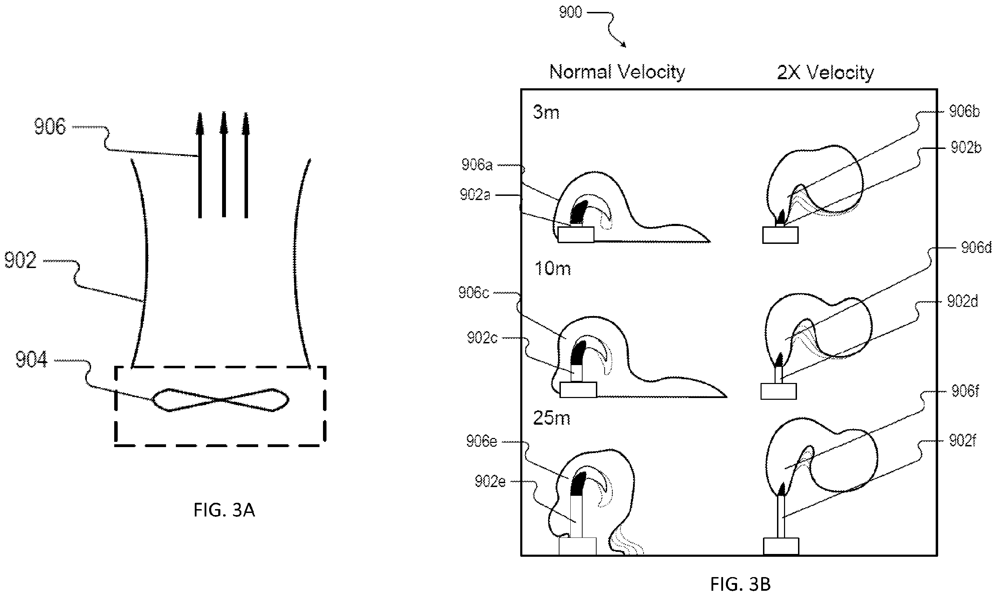

The increased exit velocity and/or taller fan stack 107 of the gas-liquid contactor 100 may help reduce or prevent the vented CO₂-lean gas 105 from entering a recirculation zone of the gas-liquid contactor 100. The increased exit velocity of the CO₂-lean gas 105 from the fan stack 107 may be achieved by the hydraulic fan 402 rotating faster, as described above, and help to avoid or reduce plume ingestion. The effect of increased exit velocity of the CO₂-lean gas 105 and/or fan stack 107 height on the avoidance or reduction of plume ingestion may be better appreciated with reference to FIGS. 3A and 3B. FIGS. 3A and 3B show example plume distributions 900 for the CO₂-lean gas 906 discharged from different designs of fan blades 904 and fan stack 902 according to the present disclosure. For example, a fan stack 902 can have different dimensions (height and diameter) compared to conventional cooling tower fan stack designs, so that the CO₂-lean gas 906 disperses substantially upwards and into the ambient environment rather than flowing downwards to the inlet(s) 103I of the gas-liquid contactor 100. A taller stack 902 can discharge the CO₂-lean gas 906 at a point that is high enough to substantially circumvent a recirculation zone of the gas-liquid contactor 100. The recirculation zone includes spaces where the CO₂-lean gas 906 is likely to be ingested in the inlet(s) 103I of the gas-liquid contactor (e.g., near the open section sides of the housing 102). The CO₂ concentration at the inlet of the gas-liquid contactor 100 may indicate the extent to which CO₂-lean gas 906 is ingested. If the CO₂ concentration at the inlet 103I is below the CO₂ concentration of the ambient air or atmospheric air, the gas-liquid contactor 100 may be ingesting the CO₂-lean gas 906 from the plume emitted by the fan stack 902. The range of inlet CO₂ concentrations that indicate plume ingestion may change according to ambient or atmospheric conditions, which in turn, may change over time. For example, with current atmospheric CO₂ concentrations of approximately 410 ppm to 420 ppm, a gas-liquid contactor 100 with some plume ingestion can have an inlet CO₂ concentration that ranges from 385 ppm to 420 ppm. An inlet CO₂ concentration that is lower than this range may indicate that the CO₂-lean gas 906 has not sufficiently circumvented the recirculation zone. In some cases, designing the fan blades 904 and fan stack 902 to push the plume beyond the recirculation zone is associated with increased capital or operational expenses. Therefore, in some implementations, it is more cost effective to employ one or more additional gas-liquid contactors 100 to help compensate for the reduced CO₂ capture. Such cost optimization considerations are typically a factor in determining a suitable plume ingestion mitigation strategy. In some aspects, the fan stack 902 can be at least 4 times taller than the standard industry height of a cooling tower fan stack to counter plume ingestion. In some implementations, the fan stack 902 height can range from 3 m (10 feet) to 9 m (30 feet). In some implementations, the fan stack 902 height can be sized between 3 m (10 feet) to 6 m (20 feet), or 6 m (20 feet) to 9 m (30 feet).

In some aspects, another approach to reduce plume ingestion includes increasing an exhaust velocity of CO₂-lean gas 906 from the fan blades 904, so that the plume of CO₂-lean gas has an exhaust velocity that is high enough to at least partially circumvent the recirculation zone. In some implementations, the fan blades 904 and fan stack 902 height can be configured to discharge CO₂-lean gas 906 at an exhaust velocity ranging from 9 m/s to 15 m/s. In some implementations, increased fan speed can be achieved by reducing the cross-sectional area of the fan stack 902 (e.g., at the outlet 1030 of the fan stack 902). For example, the exhaust velocity of the CO₂-lean gas 906 may be doubled by reducing cross-sectional area of the fan stack (e.g., at the outlet 1030) by half.

FIG. 3B shows a computational fluid dynamics (CFD) image of plume distributions 900 of CO₂-lean gas 906 for different heights (3 m, 10 m, 25 m) of the fan stack 902. For each of the fan stack 902 heights, plume distribution (e.g., flow pattern of the CO₂-lean gas 906) is shown for a baseline exhaust velocity and twice the baseline exhaust velocity. In cases of low stack height and/or low exhaust velocity, the plume can be somewhat stagnant in the zone on a downwind side, (e.g., recirculation zone) and is at risk of being pulled back into the inlet 103I of the gas-liquid contactor 100 rather than flowing away from the recirculation zone.

For the example plume distributions 900, fan speed can be held as a constant for each of the flow patterns and the fan stack dimensions are varied to assess velocity. For example, fan stack 902a has a height of 3 meters and diameter of 7.3 m (24 feet). Fan stack 902a discharges CO₂-lean gas 906a at a first exhaust velocity. In comparison, example fan stack 902b has a height of 3 meters and a diameter that is smaller than that of fan stack 902a, which allows fan stack 902b to discharge CO₂-lean gas 906b a second exhaust velocity that is two times higher than the first exhaust velocity of fan stack 902a.

Fan stack 902c has a height of 10 meters and diameter of 7.3 m (24 feet). Fan stack 902c discharges CO₂-lean gas 906c at a third exhaust velocity and at a point that is more distant from the intake than fan stacks 902a and 902b. In comparison, example fan stack 902d has a height of 10 meters and a diameter that is smaller than that of fan stack 902c, which allows fan stack 902d to discharge CO₂-lean gas 906d at a fourth exhaust velocity that is two times higher than the third exhaust velocity of fan stack 902c.

Fan stack 902e has a height of 25 meters and diameter of 7.3 m (24 feet). Fan stack 902e discharges CO₂-lean gas 906e at a fifth exhaust velocity and at a point that is more distant from the intake than fan stacks 902a, 902b, 902c, or 902d. In comparison, example fan stack 902f has a height of 25 meters and a diameter that is smaller than fan stack 902e, which allows fan stack 902f to discharge CO₂-lean gas 906f at a sixth exhaust velocity that is two times higher than the fifth exhaust velocity of fan stack 902e.

In some implementations, the flow pattern of fan stack 902e reduces plume ingestion more effectively compared to other fan stacks shown in FIG. 3B, as it discharges CO₂-lean gas 906 at a higher point and the plume generated by fan stack 902e has a smaller cross-sectional area to achieve a higher exhaust velocity.

In some implementations, any of fan blades 904 or fan stacks 902, 902a, 902b, 902c, 902d, 902e, 902f are combinable with any of the elements described herein. For example, the gas-liquid contactor 100 can include fan blades 904 or any of the fan stacks 902, 902a, 902b, 902c, or 902d, 902e, 902f of FIG. 3B. Other configurations are possible, as described in greater detail below. For example, in another implementation, the fan blades 404, 904 rotate about horizontal rotational axes.

One or more components of the hydraulic fan 402 has a material of construction (MOC) that is resistant to the effects that the CO₂ capture solution 114 may have on the structural integrity of the components. For example, the hydraulic turbine 408, which is driven by the CO₂ capture solution 114, has a MOC that is resistant to the CO₂ capture solution 114 having a pH greater than 10. In some implementations, the shaft 410, which is exposed to the CO₂ capture solution 114, has a MOC that is resistant to the CO₂ capture solution 114 having a pH greater than 10. In some implementations, the fan blades 404, which may be exposed to the CO₂ capture solution 114, have a MOC that is resistant to the CO₂ capture solution 114 having a pH greater than 10. In some implementations, one or more of the shaft 410, the hydraulic turbine 408 and the fan blades 404 have a MOC that is resistant to the CO₂ capture solution 114 having a pH greater than 10. In some implementations, the MOC is a fiber reinforced plastic (FRP) having a vinyl ester resin. A vinyl ester resin is resistant to degradation from configurations of the CO₂ capture solution 114 that may be, or include, caustic solutions (e.g., KOH, NaOH). Other possible materials of construction include, but are not limited to, steel, such as stainless steel and more specifically 304 stainless steel which is commonly available and thus may have a lower cost. The CO₂ capture solution 114 may include a high pH solution (e.g. pH greater than 10, pH in the range of 11-13, or pH greater than 14), or may contain a caustic component (e.g., potassium hydroxide KOH or sodium hydroxide NaOH) that is capable of degrading some materials. Thus, by providing the hydraulic turbine 408, shaft 410 and/or fan blades 404 with a resistant MOC, these component(s) may have increased longevity and/or lower maintenance requirements compared to if they included an MOC that is not resistant, or not as resistant, to the capture solution 114. The resistant MOC may be provided to these component(s) using any suitable technique. For example, the resistant MOC may be made integral to these component(s), may compose the entirety of these component(s), or may be applied on a surface of these component(s).

FRP comprising polyester standard resin is used as an MOC for cooling towers. However, it has been observed that a CO₂ capture solution 114 having a high pH, or one containing a caustic component (e.g., potassium hydroxide KOH or sodium hydroxide NaOH), is capable of degrading polyester resins in FRP composites over periods of less than 10 years. Since the gas-liquid contactor 100 for use in a DAC system 9100 may be built for operation upwards of 10 years in commercial DAC systems 9100 that are designed for a plant lifespan of around 25-30 years, the use of polyester resins which may be damaged by caustic CO₂ capture solution 114 may not be suitable. In addition to compatibility with caustic solutions, it can be important that the resin and the fiberglass, e.g., the FRP composites, can form an effective bond to form a mechanically stable FRP structure. For example, a fiberglass type may have excellent resistance to caustic solutions, but if the fiberglass type does not form an effective bond with the resin, it can cause permeation of the caustic solution into the FRP.

Another example gas-liquid contactor 1100 is shown with reference to FIGS. 4A to 4C. The gas-liquid contactor 1100 includes a wall of upright fans 1110. A plurality of upright fans 1112 collectively make up the wall of upright fans 1110, and each of the upright fans 1112 rotates about a substantially horizontal axis (e.g. a rotation axis which is parallel to the ground). Each upright fan 1112 includes fan blades 1404 mounted to a shaft 1410, where the fan blades 1404 and the shaft 1410 are rotatable about a fan axis 1410A that has a substantially horizontal orientation. Each upright fan 1112, and more particularly its fan blades 1404, is spaced apart from another adjacent upright fan 1112 to form the wall of upright fans 1110. Referring to FIGS. 4B and 4C, the hydraulic turbine 1408 of the gas-liquid contactor 1100 is mechanically coupled to the shaft 1410 of one, more or all of the upright fans 1112 and is configured to rotate the respective shafts 1410 and the fan blades 1404 coupled thereto. In some implementations, an example of which is shown in FIGS. 4A to 4C, the gas-liquid contactor 1100 has a single hydraulic turbine 1408 to drive all upright fans 1112. Referring to FIG. 4B and 4C, the hydraulic turbine 1408 is located above the packing 106 and packing sections 1060A, 1060B, 1060C. In some implementations, the hydraulic turbine 1408 is coupled to one or more turbine shafts 1411 to rotate the turbine shafts 1411, and the turbine shafts 1411 are each coupled to a respective shaft 1410 of a respective fan 1112 via suitable gearing 1413, such that the hydraulic turbine 1408 can drive the shafts 1410 and thus each set of fan blades 1404. In some implementations, the gearing 1413 coupling the turbine shafts 1413 to the fan shafts 1410 is a bevel gear arrangement. Other configurations for the gearing 1413 are possible, as are other mechanical couplings between the turbine shafts 1411 and fan shafts 1410. The gas-liquid contactor 1100 of FIGS. 4A to 4C is free of a plenum. The gas-liquid contactor 1100 of FIGS. 4A to 4C allows for multiple fans to be driven by a single liquid pump via a single hydraulic turbine 1408. The description, features, reference numbers, and associated advantages of the gas-liquid contactor 100 provided above apply *mutatis mutandis* to the gas-liquid contactor 1100 of FIGS. 4A to 4C.

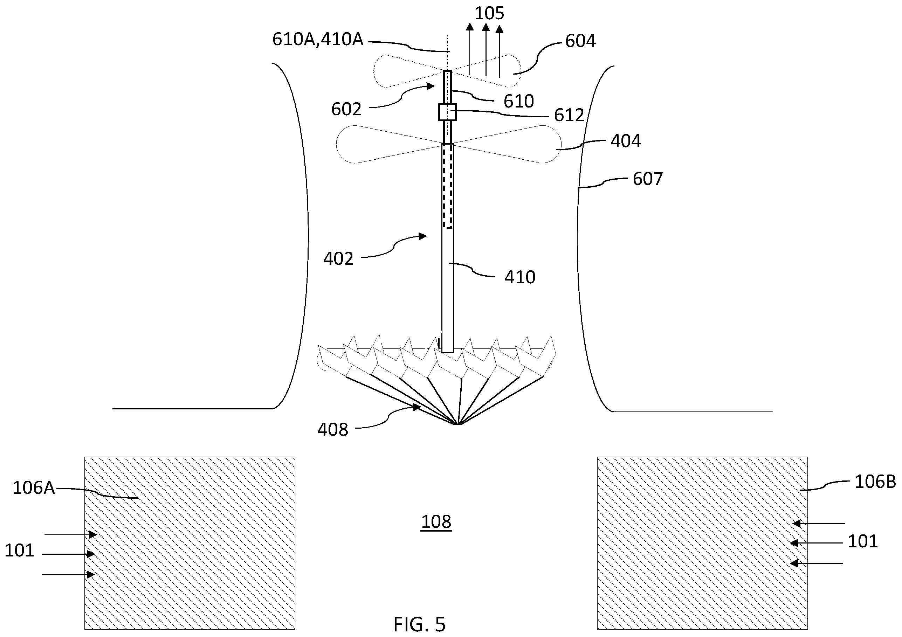

While the hydraulic fan 402 has been sometimes described herein as being used to replace an electric fan in a gas-liquid contactor, in some implementations, the hydraulic fan 402 is used in combination with one or more electric fans 602 in order to supplement and enhance the air flow into and through the gas-liquid contactor 100, 1100. For example, and referring to FIG. 5, the hydraulic fan 402 can be combined with an electric fan 602 that includes fan blades 604 that are mounted to a fan shaft 610 that is rotatable by an electric motor 612. The electric motor 612 in FIG. 5 is mounted about, or onto, the electric fan shaft 610. In other implementations, the electric motor 612 is mechanically coupled to the electric fan shaft 610 with gearing. The rotatable components of the electric fan 602 - the fan blades 604 and the fan shaft 610 - are rotatable about a fan axis 610A defined by the fan shaft 610. In the implementation of the electric fan 602 of FIG. 5, the fan shaft 610 is mounted with suitable bearings within the shaft 410 of the hydraulic fan 402, such that the fan shaft 610 of the electric fan 602 and the shaft 410 of the hydraulic fan 402 are coaxial. In the implementation of the electric fan 602 of FIG. 5, the electric fan axis 610A is collinear with the shaft axis 410A of the hydraulic fan 402. In the implementation of the electric fan 602 of FIG. 5, the fan blades 604 and the electric motor 612 are located above, and downstream of, the fan blades 404 of the hydraulic fan 402 within the fan stack 607. In other implementations, the fan blades 404 of the hydraulic fan 402 are located downstream of the fan blades 604 of the electric fan 602 within the fan stack 607. The fan shaft 610 of the electric fan 602 and the shaft 410 of the hydraulic fan 402 may rotate about their respective axes 610A, 410A in the same rotational direction, or in opposite rotational directions. When the fan blades 604, 404 of the electric fan 602 and the hydraulic fan 402 are rotating, the hydraulic fan 402 and the electric fan 602 circulate the CO₂-laden air 101 through the packing sections 106A, 106B, and circulate the CO₂-lean gas 105 out of the fan stack 607.

The operation of the electric fan 602 in combination with the hydraulic fan 402 may boost the exit velocity of CO₂-lean gas 105, and thus help to further prevent or reduce plume ingestion. Supplementing the hydraulic fan 402 with the electric fan 602 may increase the overall velocity of the CO₂-laden air 101 through the packing 106. In some implementations, the hydraulic fan 402 may help to lower the power consumption of the electric fan 602. For example, the hydraulic turbine 408 can be used to supplement the electric power required by the electric motor 612 of the electric fan 602. In such an implementation, the hydraulic turbine 408 can be positioned along the electric fan shaft 610, or between the gear box and the fan blades 604 of the electric fan 602. Any fluid flow over the hydraulic turbine 408 in such an implementation would cause the hydraulic turbine 408 to rotate to provide fan power that would not need to be provided by the electric fan 602. One or more components of the electric fan 602, such as the fan shaft 610, the electric motor 612 and the fan blades 604, may have a MOC that it is compatible with the caustic CO₂ capture solution 114.

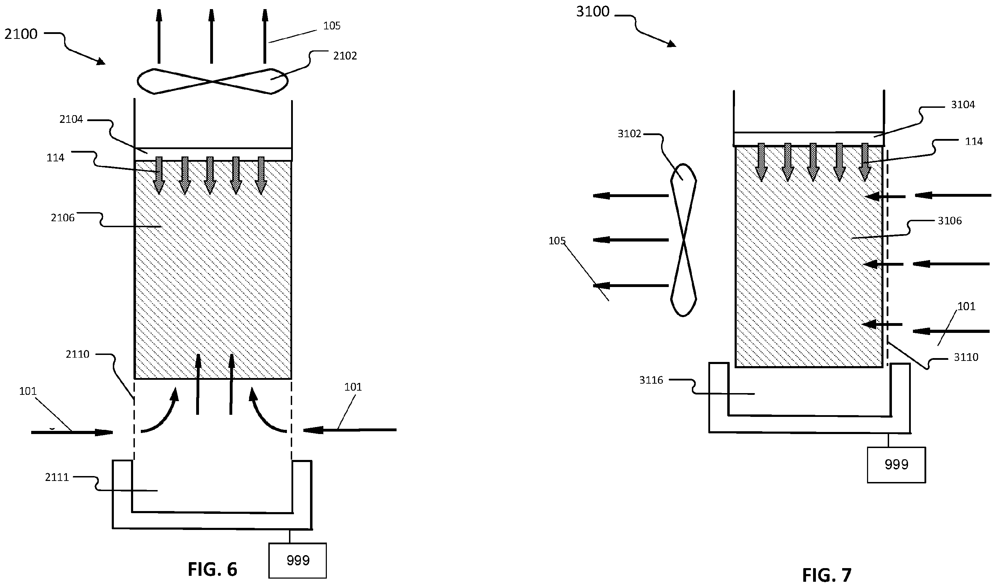

Other configurations of the gas-liquid contactor 100, 1100 are possible. Referring to FIG. 6, the gas-liquid contactor 2100 can have an upright body and an air inlet 2110 along a bottom portion through which the CO₂ laden air 101 is admitted into the gas-liquid contactor 2100. The fan blades 2102 rotate to draw the CO₂ laden air 101 through the inlet 2110 in an upward direction to contact the packing section 2106. In the configuration of FIG. 6, the gas-liquid contactor 2100 has only one packing section 2106 and may therefore be referred to as a "single cell" gas-liquid contactor 2100. The CO₂ capture solution 114 circulates downwards by, for example, gravity flow, uniform or laminar flow, etc., within the packing 2106 and eventually flows into one or more bottom basins 2111. As the CO₂ capture solution 114 circulates through and over the packing 2106, the CO₂ laden air 101 is flowing (e.g., by action of the fan blades 2102) upwardly through the packing 2106 to contact the CO₂ capture solution 114. Thus, the flow of CO₂ capture solution 114 through the packing 2106 in FIG. 6 is counter-current (or counter) to the flow of the CO₂ laden air 101 through the packing 2106. A portion of the CO₂ within the CO₂ laden air 101 is transferred to (e.g., absorbed by) the CO₂ capture solution 114, and the fan blades 2102 move the CO₂ lean gas 105 out of the gas-liquid contactor 2100 to an ambient environment. The CO₂ rich solution flows into the at least one bottom basin 2111.

Referring to FIG. 7, the gas-liquid contactor system 3100 has an upright body and an inlet 3110 along an upright side portion through which the CO₂ laden air 101 is admitted into the gas-liquid contactor system 3100. The fan blades 3102 rotate about a fan axis to draw the CO₂ laden air 101 through the inlet 3110 in a substantially horizontal direction to contact the section of packing 3106. In the configuration of FIG. 7, the gas-liquid contactor system 3100 has only one section of packing 3106 and may therefore be referred to as a "single cell" gas-liquid contactor system 3100. The CO₂ capture solution 114 circulates downwards by, for example, gravity flow, uniform or laminar flow, etc., within the packing 3106 and eventually flows into one or more bottom basins 3116. As the CO₂ capture solution 114 circulates through the packing 3106, the CO₂ laden air 101 is flowing (e.g., by action of the fan blades 3102) substantially horizontally through the packing 3106 to thereby contact the CO₂ capture solution 114. Thus, the flow of CO₂ capture solution 114 through the packing 3106 in FIG. 7 is substantially perpendicular to the flow of the CO₂ laden air 101 through the packing 3106. Such a configuration of the flows may be referred to as a "cross flow" configuration. A portion of the CO₂ within the CO₂ laden air stream 101 is transferred to the CO₂ capture solution 114, and the fan blades 3102 move the CO₂-lean gas 105 out of the gas-liquid contactor 3100 to an ambient environment. The CO₂ rich solution flows into the at least one bottom basin 3116.

While in example embodiments one or more sections of packing 3106 are shown having substantially upright orientations (i.e., defining a plane that has an upright orientation), one or more sections of packing 3106 may having substantially horizontal orientations (i.e., defining a plane that has a horizontal orientation). Similarly, one or more sections of packing 3106 may have orientations that form non-zero angles with a vertical plane and/or a horizontal plane.

Referring to FIG. 8, the gas-liquid contactor 100, 1100, 2100, 3100 with the hydraulic fan 402 is part of a direct-air-capture (DAC) system 9100 for capturing CO₂ directly from atmospheric air, according to one possible and non-limiting example of a use for the gas-liquid contactor 100, 1100, 2100, 3100. The gas-liquid contactor 100, 1100, 2100, 3100 absorbs some of the CO₂ from the atmospheric air 1603 using the CO₂ capture solution 114 to form a CO₂ rich solution 1602. The CO₂ rich solution 1602 (e.g. the CO₂-laden capture solution 111) flows from the gas-liquid contactor 100, 1100, 2100, 3100 to a pellet reactor 9110 of the DAC system 9100. A slurry of calcium hydroxide 2104 is injected into the pellet reactor 9110. As Ca²⁺ reacts with CO₃²⁻in the pellet reactor 9110, it drives dissolution of calcium hydroxide to return a stream of aqueous alkaline solution as the CO₂ capture solution 114, and to precipitate calcium carbonate (CaCO₃) onto calcium carbonate particles in the pellet reactor 9110. Further processing of the calcium carbonate solids, including but not limited to filtering, dewatering or drying, may occur prior to sending the calcium carbonate solids to downstream process units. A stream 9106 of calcium carbonate solids is transported from the pellet reactor 9110 to a calciner 2120 of the DAC system 9100. The calciner 2120 calcines the calcium carbonate of the stream 9106 from the pellet reactor 9110 to produce a stream of gaseous CO₂ 2108 and a stream of calcium oxide (CaO) 2101, possibly by oxy-combustion of a fuel source in the calciner 2120. The stream of gaseous CO₂ 2108 is processed for sequestration or other uses, thereby removing some of the CO₂ from the atmospheric air 1603 processed in the gas-liquid contactor 100, 1100, 2100, 3100. The stream of calcium oxide (CaO) 2101 is slaked with water in a slaker 2130 of the DAC system 9100 to produce the slurry of calcium hydroxide 2104 that is provided to the pellet reactor 9110. The DAC system 9100 may include multiple gas-liquid contactors 100, 1100, 2100, 3100, where each gas-liquid contactor 100, 1100, 2100, 3100 forms a cell of a train/assembly of gas-liquid contactors 100, 1100, 2100, 3100.

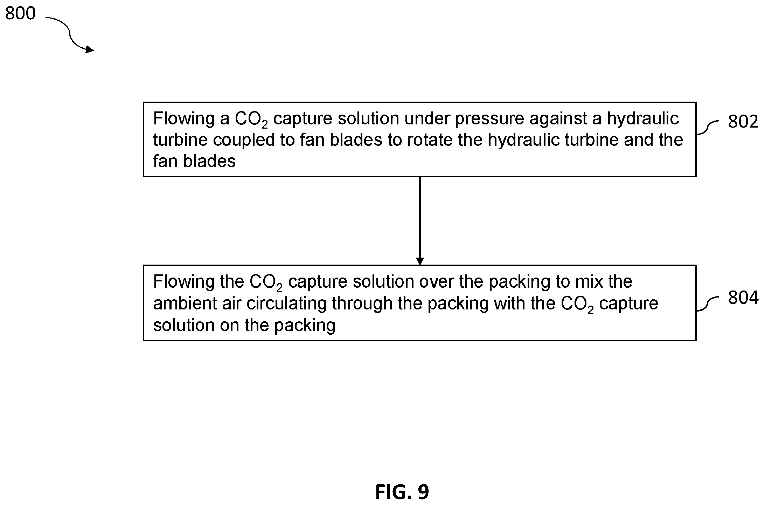

In some implementations, and referring to FIG. 9, a method 800 for removing carbon dioxide (CO₂) from ambient air includes flowing (802) the CO₂ capture solution 1114 under pressure against a hydraulic turbine 408, 1408 coupled to fan blades 404, 1404 to rotate the hydraulic turbine 408, 1408 and the fan blades 404, 1404. Rotation of the fan blades 404, 1404 circulates the ambient air (e.g. the CO₂-laden air 101) through the packing 106. At 804, the method 800 includes flowing the CO₂ capture solution 114 over packing 106, for example using the pressure generated at top basin nozzles 104N from the gravitational head of the CO₂ capture solution 114 collected in top basins 104. Flowing the CO₂ capture solution 114 over the packing 106 mixes the ambient air circulating through the packing 106 with the CO₂ capture solution 114 present on the packing 106, and this mixing causes CO₂ from the ambient air to be absorbed into the CO₂ capture solution 114 and also form the CO₂-lean gas 105.

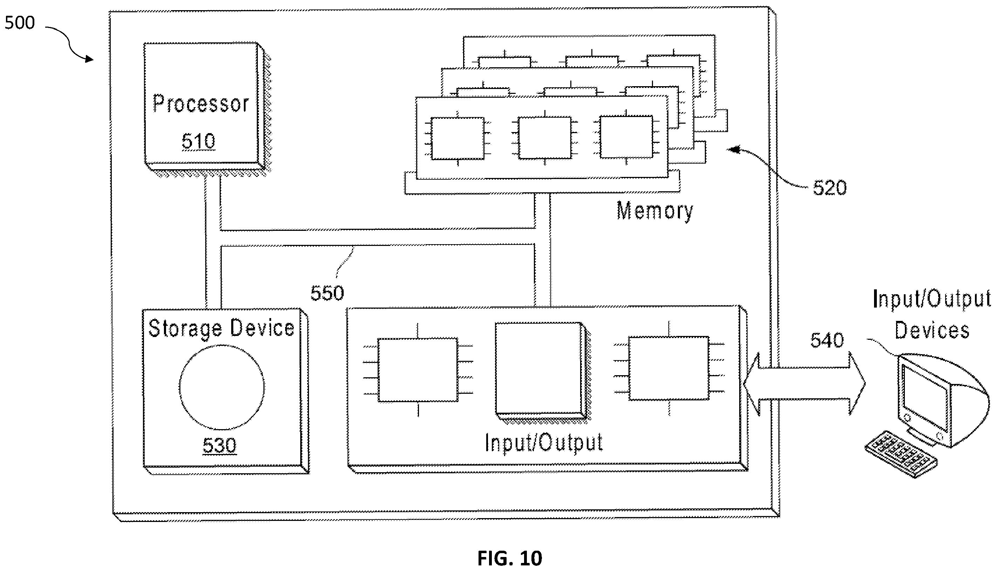

FIG. 10 is a schematic diagram of a control system (or controller) 500 for a gas-liquid contactor 100,1100,2100,3100. The system 500 can be used for the operations described in association with any of the computer-implemented methods described previously, for example as or as part of the control system 999 or other controllers described herein.

The system 500 is intended to include various forms of digital computers, such as laptops, desktops, workstations, personal digital assistants, servers, blade servers, mainframes, and other appropriate computers. The system 500 can also include mobile devices, such as personal digital assistants, cellular telephones, smartphones, and other similar computing devices. Additionally the system can include portable storage media, such as, Universal Serial Bus (USB) flash drives. For example, the USB flash drives may store operating systems and other applications. The USB flash drives can include input/output components, such as a wireless transmitter or USB connector that may be inserted into a USB port of another computing device.

The system 500 includes a processor 510, a memory 520, a storage device 530, and an input/output device 540. Each of the components 510, 520, 530, and 540 are interconnected using a system bus 550. The processor 510 is capable of processing instructions for execution within the system 500. The processor may be designed using any of a number of architectures. For example, the processor 510 may be a CISC (Complex Instruction Set Computers) processor, a RISC (Reduced Instruction Set Computer) processor, or a MISC (Minimal Instruction Set Computer) processor.

In one implementation, the processor 510 is a single-threaded processor. In some implementations, the processor 510 is a multi-threaded processor. The processor 510 is capable of processing instructions stored in the memory 520 or on the storage device 530 to display graphical information for a user interface on the input/output device 540.

The memory 520 stores information within the system 500. In one implementation, the memory 520 is a computer-readable medium. In one implementation, the memory 520 is a volatile memory unit. In some implementations, the memory 520 is a non-volatile memory unit.

The storage device 530 is capable of providing mass storage for the system 500. In one implementation, the storage device 530 is a computer-readable medium. In various different implementations, the storage device 530 may be a floppy disk device, a hard disk device, an optical disk device, or a tape device.

The input/output device 540 provides input/output operations for the system 500. In one implementation, the input/output device 540 includes a keyboard and/or pointing device. In some implementations, the input/output device 540 includes a display unit for displaying graphical user interfaces.

Certain features described can be implemented in digital electronic circuitry, or in computer hardware, firmware, software, or in combinations of them. The apparatus can be implemented in a computer program product tangibly embodied in an information carrier, e.g., in a machine-readable storage device for execution by a programmable processor; and method steps can be performed by a programmable processor executing a program of instructions to perform functions of the described implementations by operating on input data and generating output. The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors of any kind of computer. Generally, a processor will receive instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the features can be implemented on a computer having a display device such as a CRT (cathode ray tube) or LCD (liquid crystal display) monitor for displaying information to the user and a keyboard and a pointing device such as a mouse or a trackball by which the user can provide input to the computer. Additionally, such activities can be implemented via touchscreen flat-panel displays and other appropriate mechanisms.

The features can be implemented in a control system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include a local area network ("LAN"), a wide area network ("WAN"), peer-to-peer networks (having ad-hoc or static members), grid computing infrastructures, and the Internet.

A number of embodiments of the disclosure have been described. Nevertheless, it will be understood that various modifications may be resulting in embodiments within the scope of the claims. Further modifications and alternative embodiments of various aspects will be apparent to those skilled in the art in view of this description. Accordingly, this description is to be construed as illustrative only. It is to be understood that the forms shown and described herein are to be taken as examples of embodiments. Elements and materials may be substituted for those illustrated and described herein, parts and processes may be reversed, and certain features may be utilized independently, all as would be apparent to one skilled in the art after having the benefit of this description. Changes may be made in the elements described herein.

## Claims

1. A gas-liquid contactor (100, 1100, 2100, 3100) for capturing carbon dioxide (CO2) from ambient air, the gas-liquid contactor comprising:
a housing (102) defining an interior (113), the housing comprising at least one inlet and at least one outlet;
a flow system (120) supported by the housing and comprising:
at least one basin (109, 104, 110, 115) comprising a top basin (104) configured to contain a CO2 capture solution (114);
at least one liquid distribution pipe (412) in fluid communication with at least one turbine nozzle (416); and
a pump (422) configured to flow the CO2 capture solution through the at least one liquid distribution pipe to the at least one turbine nozzle to emit a pressurized flow of the CO2 capture solution from the at least one turbine nozzle; and
at least one hydraulic fan (402) comprising:
at least one shaft (410);
a hydraulic turbine (408) mounted to the at least one shaft; and
a plurality of fan blades (404, 604, 904, 1404, 3102) mounted to the at least one shaft (410, 610, 1410), the plurality of fan blades positioned adjacent to the at least one outlet (1030), the hydraulic turbine positioned adjacent to the at least one turbine nozzle and configured to rotate in response to the pressurized flow of the CO2 capture solution from the at least one turbine nozzle impacting the hydraulic turbine, rotation of the hydraulic turbine causing rotation of the plurality of fan blades, circulation of the ambient air through the at least one inlet and circulation of a CO2-lean gas through the at least one outlet.

2. The gas-liquid contactor of claim 1, wherein the CO2 capture solution comprises an aqueous alkaline solution.

3. The gas-liquid contactor of claim 1 or 2, wherein the CO2 capture solution comprises a hydroxide solution, for example, wherein the CO2 capture solution includes at least one of potassium hydroxide (KOH) and sodium hydroxide (NaOH).

4. The gas-liquid contactor of claim 1, wherein the CO2 capture solution at a reference temperature has a density greater than a density of water at the reference temperature.

5. The gas-liquid contactor of any one of claims 1 to 4, wherein the plurality of fan blades is configured to rotate at a fan speed, and the pump is configured to vary the pressurized flow of the CO2 capture solution from the at least one turbine nozzle to vary the fan speed.

6. The gas-liquid contactor of any one of claims 1 to 5, wherein a fan speed of the plurality of fan blades is configured to increase in response to an increase in the pressurized flow of the CO2 capture solution from the at least one turbine nozzle.

7. The gas-liquid contactor of any one of claims 1 to 6, further comprising at least one packing positioned in the interior of the housing adjacent to the at least one inlet, wherein:
the top basin (104) is positioned at least partially above the at least one packing and configured to distribute the CO2 capture solution over the at least one packing;
the at least one basin comprises a bottom basin (110) positioned beneath the at least one packing and configured to receive a CO2-laden capture solution from the at least one packing; and
the pump is configured to flow at least some of the CO2-laden capture solution from the bottom basin to a regeneration system (424, 9110, 1650, 2120) configured to regenerate the at least some of the CO2-laden capture solution and form a CO2-lean liquid, and flow the CO2-lean liquid from the regeneration system into the at least one liquid distribution pipe, and
optionally wherein the regeneration system comprises a pellet reactor (9110) or an electrochemical system (1650).

8. The gas-liquid contactor of any one of claims 1 to 7, wherein:
the CO2 capture solution has a pH greater than 10; and
the at least one of the hydraulic turbine and the at least one shaft each comprise a material of construction resistant to the CO2 capture solution, and
optionally wherein the material of construction is a fiber reinforced plastic (FRP) comprising a vinyl ester resin.

9. The gas-liquid contactor of any one of claims 1 to 6, further comprising at least one packing (106, 2106, 3106) positioned in the interior of the housing adjacent to the at least one inlet, the at least one packing having a packing height equal to a height of the housing.

10. The gas-liquid contactor of any one of claims 1 to 6, further comprising a plurality of packings, wherein:
the at least one inlet includes a plurality of inlets;
each packing of the plurality of packings is disposed adjacent to a respective inlet of the plurality of inlets;
the housing defines a plenum (108) between at least two of the plurality of packings; and
the at least one hydraulic fan is positioned above the plenum.

11. The gas-liquid contactor of any one of claims 1 to 10, wherein the at least one shaft has an upright orientation and the plurality of fan blades are mounted on the at least one shaft above the hydraulic turbine.

12. The gas-liquid contactor of any one of claims 10 or 11, wherein the at least one basin includes a turbine basin (115) positioned beneath the hydraulic turbine and above the top basin, wherein the turbine basin is in fluid communication with the top basin and configured to receive the CO2 capture solution from the hydraulic turbine.

13. The gas-liquid contactor of any one of claims 1 to 12, further comprising a fan stack (107, 607, 902) mounted to the housing and defining the at least one outlet, wherein rotation of the plurality of fan blades causes circulation of the CO2-lean gas through the fan stack, the fan stack having a height between 3 m (10 feet) and 9 m (30 feet).

14. The gas-liquid contactor of any one of claims 1 to 13, further comprising an electric fan comprising a plurality of fan blades mounted to a fan shaft rotatable by an electric motor (612), the fan shaft of the electric fan being coaxial with the at least one shaft of the hydraulic fan, wherein rotation of the fan blades of the electric fan is configured to cause circulation of the ambient air through the at least one inlet and circulation of the CO2-lean gas through the at least one outlet.

15. The gas-liquid contactor of claim 1, further comprising a plurality of upright fans (1112) forming a wall of upright fans (1110), each upright fan of the plurality of upright fans comprising fan blades of the plurality of fan blades (1404), wherein:
the at least one shaft comprises a plurality of shafts, each shaft of the plurality of shafts coupled to the fan blades of a respective upright fan of the plurality of upright fans, the plurality of shafts defining a plurality of horizontal axes about which the respective plurality of shafts and the respective fan blades are rotatable; and
the hydraulic turbine is mechanically coupled to each shaft of the plurality of shafts and configured to rotate each of the plurality of shafts.

## Patentansprüche

1. Gas-Flüssigkeit-Kontaktor (100, 1100, 2100, 3100) zum Einfangen von Kohlendioxid (CO2) aus Umgebungsluft, wobei der Gas-Flüssigkeit-Kontaktor umfasst:
ein Gehäuse (102), das einen Innenraum (113) definiert, wobei das Gehäuse wenigstens einen Einlass und wenigstens einen Auslass umfasst;
ein Strömungssystem (120), das von dem Gehäuse getragen wird und umfasst:
wenigstens ein Becken (109, 104, 110, 115), das ein oberes Becken (104) umfasst, gestaltet zum Enthalten einer CO2-Einfanglösung (114);
wenigstens ein Flüssigkeitsverteilungsrohr (412) in Fluidverbindung mit wenigstens einer Turbinendüse (416); und
eine Pumpe (422), gestaltet zum Strömen der CO2-Einfanglösung durch das wenigstens eine Flüssigkeitsverteilungsrohr zu der wenigstens einen Turbinendüse, um einen druckbeaufschlagten Strom der CO2-Einfanglösung aus der wenigstens einen Turbinendüse zu emittieren; und
wenigstens ein Hydraulikgebläse (402) umfassend:
wenigstens eine Welle (410);
eine Hydraulikturbine (408), die an der wenigstens einen Welle montiert ist; und
eine Vielzahl von Gebläseschaufeln (404, 604, 904, 1404, 3102), die an der wenigstens einen Welle (410, 610, 1410) montiert sind, wobei die Vielzahl von Gebläseschaufeln benachbart zu dem wenigstens einen Auslass (1030) angeordnet sind, wobei die Hydraulikturbine benachbart zu der wenigstens einen Turbinendüse angeordnet ist und dafür gestaltet ist, sich als Reaktion darauf zu drehen, dass der druckbeaufschlagte Strom der CO2-Einfanglösung aus der wenigstens einen Turbinendüse auf die Hydraulikturbine trifft, wobei Drehung der Hydraulikturbine Drehung der Vielzahl von Gebläseschaufeln, Zirkulation der Umgebungsluft durch den wenigstens einen Einlass und Zirkulation eines CO2-armen Gases durch den wenigstens einen Auslass bewirkt.

2. Gas-Flüssigkeit-Kontaktor nach Anspruch 1, wobei die CO2-Einfanglösung eine wässrige alkalische Lösung umfasst.

3. Gas-Flüssigkeit-Kontaktor nach Anspruch 1 oder 2, wobei die CO2-Einfanglösung eine Hydroxidlösung umfasst, beispielsweise wobei die CO2-Einfanglösung wenigstens eines von Kaliumhydroxid (KOH) und Natriumhydroxid (NaOH) umfasst.

4. Gas-Flüssigkeit-Kontaktor nach Anspruch 1, wobei die CO2-Einfanglösung bei einer Referenztemperatur eine Dichte aufweist, die größer als eine Dichte von Wasser bei der Referenztemperatur ist.

5. Gas-Flüssigkeit-Kontaktor nach einem der Ansprüche 1 bis 4, wobei die Vielzahl von Gebläseschaufeln dafür gestaltet ist, sich mit einer Gebläsegeschwindigkeit zu drehen, und die Pumpe dafür gestaltet ist, den druckbeaufschlagten Fluss der CO2-Einfanglösung aus der wenigstens einen Turbinendüse zu variieren, um die Gebläsegeschwindigkeit zu variieren.

6. Gas-Flüssigkeit-Kontaktor nach einem der Ansprüche 1 bis 5, wobei eine Gebläsegeschwindigkeit der Vielzahl von Gebläseschaufeln dafür gestaltet ist, als Reaktion auf eine Zunahme des druckbeaufschlagten Flusses der CO2-Einfanglösung aus der wenigstens einen Turbinendüse zuzunehmen.

7. Gas-Flüssigkeit-Kontaktor nach einem der Ansprüche 1 bis 6, ferner umfassend wenigstens eine Packung, die im Inneren des Gehäuses benachbart zu dem wenigstens einen Einlass angeordnet ist, wobei:
das obere Becken (104) wenigstens teilweise über der wenigstens einen Packung angeordnet ist und dafür gestaltet ist, die CO2-Einfanglösung über die wenigstens eine Packung zu verteilen;
das wenigstens eine Becken ein unteres Becken (110) umfasst, das unter der wenigstens einen Packung angeordnet und dafür gestaltet ist, eine CO2-beladene Einfanglösung von der wenigstens einen Packung aufzunehmen; und
die Pumpe dafür gestaltet ist, wenigstens einen Teil der CO2-beladenen Einfanglösung aus dem unteren Becken zu einem Regenerationssystem (424, 9110, 1650, 2120) zu strömen, das dafür gestaltet ist, den wenigstens einen Teil der CO2-beladenen Einfanglösung zu regenerieren und eine CO2-arme Flüssigkeit zu bilden, und die CO2-arme Flüssigkeit aus dem Regenerationssystem in das wenigstens eine Flüssigkeitsverteilungsrohr zu strömen, und gegebenenfalls wobei das Regenerationssystem einen Pelletreaktor (9110) oder ein elektrochemisches System (1650) umfasst.

8. Gas-Flüssigkeit-Kontaktor nach einem der Ansprüche 1 bis 7, wobei:
die CO2-Einfanglösung einen pH-Wert von höher als 10 aufweist; und
die wenigstens eine Hydraulikturbine und die wenigstens einen Welle jeweils ein Konstruktionsmaterial umfassen, das gegenüber der CO2-Einfanglösung beständig ist, und gegebenenfalls wobei das Konstruktionsmaterial ein faserverstärkter Kunststoff (FRP) ist, der ein Vinylesterharz umfasst.

9. Gas-Flüssigkeit-Kontaktor nach einem der Ansprüche 1 bis 6, ferner umfassend wenigstens eine Packung (106, 2106, 3106), die im Inneren des Gehäuses benachbart zu dem wenigstens einen Einlass angeordnet ist, wobei die wenigstens eine Packung eine Packungshöhe gleich einer Höhe des Gehäuses aufweist.

10. Gas-Flüssigkeit-Kontaktor nach einem der Ansprüche 1 bis 6, ferner umfassend eine Vielzahl von Packungen, wobei:
der wenigstens eine Einlass eine Vielzahl von Einlässen enthält;
jede Packung der Vielzahl von Packungen benachbart zu einem entsprechenden Einlass der Vielzahl von Einlässen angeordnet ist;
das Gehäuse eine Kammer (108) zwischen wenigstens zwei aus der Vielzahl von Packungen definiert; und
das wenigstens eine Hydraulikgebläse oberhalb der Kammer angeordnet ist.

11. Gas-Flüssigkeit-Kontaktor nach einem der Ansprüche 1 bis 10, wobei die wenigstens eine Welle eine aufrechte Ausrichtung aufweist und die Vielzahl von Gebläseschaufeln an der wenigstens einen Welle oberhalb der Hydraulikturbine montiert ist.

12. Gas-Flüssigkeit-Kontaktor nach einem der Ansprüche 10 oder 11, wobei das wenigstens eine Becken ein Turbinenbecken (115) enthält, das unterhalb der Hydraulikturbine und oberhalb des oberen Beckens angeordnet ist, wobei das Turbinenbecken in Fluidverbindung mit dem oberen Becken steht und dafür gestaltet ist, die CO2-Einfanglösung von der Hydraulikturbine aufzunehmen.

13. Gas-Flüssigkeit-Kontaktor nach einem der Ansprüche 1 bis 12, ferner umfassend einen Gebläsestapel (107, 607, 902), der an dem Gehäuse montiert ist und den wenigstens einen Auslass definiert, wobei Drehung der Vielzahl von Gebläseschaufeln Zirkulation des CO2-armen Gases durch den Gebläsestapel bewirkt, wobei der Gebläsestapel eine Höhe zwischen 3 m (10 Feet) und 9 m (30 Feet) aufweist.

14. Gas-Flüssigkeit-Kontaktor nach einem der Ansprüche 1 bis 13, ferner umfassend ein elektrisches Gebläse, das eine Vielzahl von Gebläseschaufeln umfasst, die an einer Gebläsewelle montiert sind, die durch einen Elektromotor (612) drehbar ist, wobei die Gebläsewelle des elektrischen Gebläses koaxial zu der wenigstens einen Welle des Hydraulikgebläses ist, wobei Drehung der Gebläseschaufeln des elektrischen Gebläses dafür gestaltet ist, Zirkulation der Umgebungsluft durch den wenigstens einen Einlass und Zirkulation des CO2-armen Gases durch den wenigstens einen Auslass zu bewirken.

15. Gas-Flüssigkeit-Kontaktor nach Anspruch 1, ferner umfassend eine Vielzahl von aufrechten Gebläsen (1112), die eine Wand von aufrechten Gebläsen (1110) bilden, wobei jedes aufrechte Gebläse der Vielzahl von aufrechten Gebläsen Gebläseschaufeln aus der Vielzahl von Gebläseschaufeln (1404) umfasst, wobei:
die wenigstens eine Welle eine Vielzahl von Wellen umfasst, wobei jede Welle der Vielzahl von Wellen an die Gebläseschaufeln eines entsprechenden aufrechten Gebläses der Vielzahl von aufrechten Gebläsen gekoppelt ist, wobei die Vielzahl von Wellen eine Vielzahl von horizontale Achsen definiert, um die die entsprechende Vielzahl von Wellen und die entsprechenden Gebläseschaufeln drehbar sind; und
die Hydraulikturbine mechanisch an jede Welle der Vielzahl von Wellen gekoppelt ist und dafür gestaltet ist, jede der Vielzahl von Wellen zu drehen.

## Revendications

1. Contacteur gaz-liquide (100, 1100, 2100, 3100) destiné à capturer du dioxyde de carbone (CO2) issu de l'air ambiant, le contacteur gaz-liquide comprenant :
une enceinte (102) définissant un intérieur (113), l'enceinte comprenant au moins une entrée et au moins une sortie ;
un système d'écoulement (120) supporté par l'enceinte et comprenant :
au moins un bassin (109, 104, 110, 115) comprenant un bassin supérieur (104) conçu pour contenir une solution de capture de CO2 (114) ;
au moins un tuyau de distribution de liquide (412) en communication fluidique avec au moins un distributeur de turbine (416) ; et
une pompe (422) conçue pour amener la solution de capture de CO2 à s'écouler à travers l'au moins un tuyau de distribution de liquide jusqu'à l'au moins un distributeur de turbine afin de produire un écoulement sous pression de la solution de capture de CO2 depuis l'au moins un distributeur de turbine ; et
au moins un ventilateur hydraulique (402) comprenant :
au moins un arbre (410) ;
une turbine hydraulique (408) montée sur l'au moins un arbre ; et
une pluralité de pales de ventilateur (404, 604, 904, 1404, 3102) montées sur l'au moins un arbre (410, 610, 1410), la pluralité de pales de ventilateur étant positionnée au voisinage de l'au moins une sortie (1030), la turbine hydraulique étant positionnée au voisinage de l'au moins un distributeur de turbine et conçue pour tourner en réponse à l'impact de l'écoulement sous pression de la solution de capture de CO2 provenant de l'au moins un distributeur de turbine sur la turbine hydraulique, la rotation de la turbine hydraulique entraînant la rotation de la pluralité de pales de ventilateur, la circulation de l'air ambiant par l'au moins une entrée et la circulation d'un gaz pauvre en CO2 par l'au moins une sortie.

2. Contacteur gaz-liquide de la revendication 1, dans lequel la solution de capture de CO2 comprend une solution aqueuse alcaline.

3. Contacteur gaz-liquide de la revendication 1 ou 2, dans lequel la solution de capture de CO2 comprend une solution d'hydroxyde, par exemple dans lequel la solution de capture de CO2 comporte de l'hydroxyde de potassium (KOH) et/ou de l'hydroxyde de sodium (NaOH).

4. Contacteur gaz-liquide de la revendication 1, dans lequel la solution de capture de CO2 à une température de référence présente une masse volumique supérieure à la masse volumique de l'eau à la température de référence.

5. Contacteur gaz-liquide de l'une quelconque des revendications 1 à 4, dans lequel la pluralité de pales de ventilateur est conçue pour tourner à une vitesse de ventilateur, et la pompe est conçue pour faire varier l'écoulement sous pression de la solution de capture de CO2 provenant de l'au moins un distributeur de turbine afin de faire varier la vitesse du ventilateur.

6. Contacteur gaz-liquide de l'une quelconque des revendications 1 à 5, dans lequel une vitesse de ventilateur de la pluralité de pales de ventilateur est conçue pour augmenter en réponse à une augmentation de l'écoulement sous pression de la solution de capture de CO2 provenant de l'au moins un distributeur de turbine.

7. Contacteur gaz-liquide de l'une quelconque des revendications 1 à 6, comprenant en outre au moins un garnissage positionné dans l'intérieur de l'enceinte au voisinage de l'au moins une entrée, dans lequel :
le bassin supérieur (104) est au moins partiellement positionné au-dessus de l'au moins un garnissage et conçu pour distribuer la solution de capture de CO2 sur l'au moins un garnissage ;
l'au moins un bassin comprend un bassin inférieur (110) positionné sous l'au moins un garnissage et conçu pour recevoir une solution de capture chargée en CO2 provenant de l'au moins un garnissage ; et
la pompe est conçue pour amener au moins une partie de la solution de capture chargée en CO2 à s'écouler depuis le bassin inférieur jusqu'à un système de régénération (424, 9110, 1650, 2120) conçu pour régénérer l'au moins une partie de la solution de capture chargée en CO2 et former un liquide pauvre en CO2, et pour amener le liquide pauvre en CO2 à s'écouler depuis le système de régénération jusqu'à l'intérieur de l'au moins un tuyau de distribution de liquide, et
éventuellement dans lequel le système de régénération comprend un réacteur à granulés (9110) ou un système électrochimique (1650).

8. Contacteur gaz-liquide de l'une quelconque des revendications 1 à 7, dans lequel :
la solution de capture de CO2 a un pH supérieur à 10 ; et
l'au moins une turbine hydraulique et l'au moins un arbre comprennent chacun un matériau de construction résistant à la solution de capture du CO2, et
éventuellement dans lequel le matériau de construction est un plastique renforcé de fibres (FRP) comprenant une résine d'ester vinylique.

9. Contacteur gaz-liquide de l'une quelconque des revendications 1 à 6, comprenant en outre au moins un garnissage (106, 2106, 3106) positionné dans l'intérieur de l'enceinte au voisinage de l'au moins une entrée, l'au moins un garnissage ayant une hauteur de garnissage égale à la hauteur de l'enceinte.

10. Contacteur gaz-liquide de l'une quelconque des revendications 1 à 6, comprenant en outre une pluralité de garnissages, dans lequel :
l'au moins une entrée comporte une pluralité d'entrées ; chaque garnissage de la pluralité de garnissages est disposé au voisinage d'une entrée respective de la pluralité d'entrées ;
l'enceinte définit un plénum (108) entre au moins deux garnissages de la pluralité de garnissages ; et
l'au moins un ventilateur hydraulique est positionné au-dessus du plénum.

11. Contacteur gaz-liquide de l'une quelconque des revendications 1 à 10, dans lequel l'au moins un arbre présente une orientation verticale et la pluralité de pales de ventilateur sont montées sur l'au moins un arbre au-dessus de la turbine hydraulique.

12. Contacteur gaz-liquide de l'une quelconque des revendications 10 et 11, dans lequel l'au moins un bassin comporte un bassin de turbine (115) positionné sous la turbine hydraulique et au-dessus du bassin supérieur, le bassin de turbine étant en communication fluidique avec le bassin supérieur et conçu pour recevoir la solution de capture de CO2 provenant de la turbine hydraulique.

13. Contacteur gaz-liquide de l'une quelconque des revendications 1 à 12, comprenant en outre un empilement de ventilateurs (107, 607, 902) monté sur l'enceinte et définissant l'au moins une sortie, la rotation de la pluralité de pales de ventilateur entraînant la circulation du gaz pauvre en CO2 à travers l'empilement de ventilateurs, l'empilement de ventilateurs ayant une hauteur comprise entre 3 m (10 pieds) et 9 m (30 pieds).

14. Contacteur gaz-liquide de l'une quelconque des revendications 1 à 13, comprenant en outre un ventilateur électrique comprenant une pluralité de pales de ventilateur montées sur un arbre de ventilateur que peut faire tourner un moteur électrique (612), l'arbre de ventilateur du ventilateur électrique étant coaxial avec l'au moins un arbre du ventilateur hydraulique, la rotation des pales de ventilateur du ventilateur électrique étant conçue pour entraîner la circulation de l'air ambiant par l'au moins une entrée et la circulation du gaz pauvre en CO2 par l'au moins une sortie.

15. Contacteur gaz-liquide de la revendication 1, comprenant en outre une pluralité de ventilateurs verticaux (1112) formant une paroi de ventilateurs verticaux (1110), chaque ventilateur vertical de la pluralité de ventilateurs verticaux comprenant des pales de ventilateur de la pluralité de pales de ventilateur (1404), dans lequel :
l'au moins un arbre comprend une pluralité d'arbres, chaque arbre de la pluralité d'arbres étant couplé aux pales de ventilateur d'un ventilateur vertical respectif de la pluralité de ventilateurs verticaux, la pluralité d'arbres définissant une pluralité d'axes horizontaux autour desquels peuvent tourner la pluralité respective d'arbres et les pales de ventilateur respectives ; et la turbine hydraulique est couplée mécaniquement à chaque arbre de la pluralité d'arbres et conçue pour faire tourner chaque arbre de la pluralité d'arbres.
